# EUROPÄISCHE PATENTSCHRIFT

(11) **EP 2 705 971 B1**
(45) Veröffentlichungstag und Bekanntmachung des Hinweises auf die Patenterteilung: **04.11.2015**
(21) Anmeldenummer: 13183805.4
(22) Anmeldetag: 10.09.2013
(51) Int. Cl.: B60L 5/19

(54) **Stromabnehmer**
Current collector
Prise de courant

(30) Priorität: 11.09.2012 DE 102012108491
(43) Veröffentlichungstag der Anmeldung: 12.03.2014
(73) Patentinhaber: Stemmann-Technik GmbH, 48465 Schüttorf (DE); Bombardier Transportation GmbH, 10785 Berlin (DE)
(72) Erfinder: Tessmer, Wolfram, 13587 Berlin (DE); Maaß, Jörg-Torsten, 16515 Oranienburg (DE); Dierschke, Thomas, 69214 Eppelheim (DE); Hengstermann, Thomas, 48432 Rheine (DE); Sievers, Guido, 48485 Neuenkirchen (DE); Kunze, Jens, 48599 Gronau (DE)
(74) Vertreter: Griepenstroh, Jörg

(56) Entgegenhaltungen:
- EP-A2- 2 497 674
- DE-C1- 19 601 009

## Beschreibung

Die Erfindung betrifft einen Stromabnehmer gemäß den Merkmalen des Patentanspruchs 1.

Stromabnehmer dienen zur Übertragung elektrischer Energie von einer fest montierten, Strom führenden Oberleitung zu elektrischen Komponenten des angetriebenen Fahrzeugs. Solche Stromabnehmer finden sich insbesondere an gleisgebundenen Fahrzeugen. Bei moderneren Schienenfahrzeugen kommt aufgrund der leichteren Bauweise in der Regel der so genannte Einholmstromabnehmer zum Einsatz. Die Höhenverstellung der Stromabnehmer erfolgt elektrisch, hydraulisch oder pneumatisch gegenüber dem fahrzeugseitigen Grundrahmen des Stromabnehmers. Auf den Grundrahmen ist ein Stangenwerk, bestehend aus Unterarm, Lenkerstange und Oberarm und an diesem eine Stromabnehmerwippe mit einer Schleifleistenanordnung zur Kontaktierung mit dem Fahrdraht der Oberleitung angeordnet. In Abhängigkeit von der Spannung und den zu übertragenen Stromstärken können eine oder mehrere Schleifleisten vorgesehen sein.

Eine besondere Herausforderung im Hinblick auf die Gestaltung von Stromabnehmern für den grenzüberschreitenden Schienenverkehr ist die Anpassung an die verschiedenen Lichtraumprofile, denn bevorzugt soll ein Stromabnehmer die Nachrüstung von Fahrzeugen ermöglichen, die beispielsweise in Deutschland und den deutschen Nachbarländern zugelassen werden können. Maßgeblich ist für diesen Fall die Einhaltung einschlägiger europäischer Normen bezüglich des Zusammenwirkens des Stromabnehmers und der Fahrleitung (EN 50367). Beispielsweise müsste für die Schweiz das Lichtraumprofil EN 50367 B2 eingehalten werden, während für Deutschland und Österreich das Lichtraumprofil EN 50367 B3 eingehalten werden muss. Die Profile unterscheiden sich voneinander sowohl was die Wippenbreite angeht als auch was den Profilverlauf sowie die isolierten Längen der Auflaufhörner betrifft.

Ein wesentliches Element der Stromabnehmerwippe ist eine quer zur Fahrtrichtung verlaufende Bügelanordnung, die endseitig Auflaufhörner aufweist. Diese sind nach unten, d. h. vom Fahrdraht weg und dem Profilverlauf folgend, gebogen. Mittels der Auflaufhörner wird verhindert, dass sich der Stromabnehmer an der Oberleitung verhakt, wenn die Oberleitung durch seitliche Auslenkung den Schleifleistenbereich verlassen sollte. Aufgrund unterschiedlicher Stromübertragungssysteme sind auch unterschiedliche Breiten der Stromabnehmerwippen erforderlich. In der Schweiz beträgt die erforderliche Breite beispielsweise 1.450 mm, wohingegen in Deutschland eine Wippenbreite von 1.950 mm verlangt wird. Es gibt Länder mit unterschiedlichen Lichtraumprofilen innerhalb des Landes sowie auch weitere Standards mit Breiten von 1.600 mm und 1.800 mm. Im grenzüberschreitenden Verkehr waren Schienenfahrzeuge daher mit unterschiedlichen Stromabnehmern für die jeweiligen Stromübertragungssysteme auszustatten.

Die DE 199 14 566 A1 schlägt aus diesem Grund einen Stromabnehmer für Mehrsystem-Schienenfahrzeuge vor, bei welchen zwei separate, in Längsrichtung des Fahrzeugs voneinander beabstandete und quer zu ihm verlaufende Bügel mit je einem seitlichen Auflaufhorn an einer Wippe angeordnet sind, wobei die beiden Auflaufhörner zu entgegengesetzten Seiten des Fahrzeugs weisen und wobei die Bügel und damit die beiden Auflaufhörner mittels je einer hydraulischen oder pneumatischen Stelleinrichtung gegensätzlich zueinander quer zur Fahrtrichtung verschiebbar sind. Zusätzlich sind zwei in Längsrichtung des Fahrzeugs zueinander beabstandete, an der Wippe angeordnete Schleifleisten durch je eine weitere hydraulische oder pneumatische Stelleinrichtung gegensätzlich zueinander quer zur Fahrtrichtung verschiebbar. Auf diese Weise erfolgt die Anpassung an verschiedene Breiten der Stromübertragungssysteme.

In der EP 245 5251 A2 wird eine Stromabnehmerwippe beschrieben, die eine verstellbare Bügelanordnung umfasst, deren Endhörner (Bügelauflaufhörner) jeweils mittels zwei Paaren von Hebeln verlagerbar sind. Die Endhörner bestimmen sowohl in der eingeschwenkten Position als auch in der ausgeschwenkten Position das Profil der Stromabnehmerwippe mit. Die Endhörner besitzen zu ihren Enden hin einen Isolationsbereich, der auf eine Horizontalebene projizierte Isolationslänge gleich bleibt, unabhängig davon, ob Endhörner eingeschwenkt oder ausgeschwenkt sind. Durch das Verschwenken erfolgt zwar die gewünschte Breitenanpassung an Lichtraumprofile unterschiedlicher Stromübertragungssysteme, allerdings erfordern diese in der Regel auch unterschiedlich lange Isolationsbereiche unterhalb der Bügelauflaufhörner. Dieses zweite Kriterium kann mit der beschriebenen Lösung nicht für jedes Stromübertragungssystem erfüllt werden, da nur eine einzige projizierte Isolationslänge zur Verfügung steht. Aber auch die optimale Ausnutzung der vorgegebenen Lichtraumprofile z.B. nach EN 50367-B3 ist durch die Kinematik der Hebelanordnung schwierig, weil es durch das Verschwenken zu einer Schrägstellung der unteren Enden der Bügelauflaufhörner kommen kann.

In der EP 2 455 251 A2 wird die Möglichkeit genannt, Schleifleisten für den Einsatz auf mindestens zwei Stromübertragungssystemen auszubilden. Dies geschieht durch Schleifleisten konstanter Länge. Somit muss ein Kompromiss für die Länge der Schleifstücke gefunden werden. Hierdurch wird die Qualität der Stromübertragung bei seitlich auflaufendem Fahrdraht verschlechtert. Die Abnutzung der Auflaufhörner wird durch die Stromübertragung der Oberleitung erhöht, da der Fahrdraht häufiger die Schleifleiste verlässt. Dies führt durch Reibung und Stromübertragung zu einem verstärkten Verschleiß der Auflaufhörner und der Oberleitung.

In der DE 93 04 251 U1 wird ebenfalls ein Stromabnehmer für grenzüberschreitenden Zugverkehr beschrieben, wobei der Stromabnehmer nicht nur eine Nutzung in verschiedenen Lichtraumprofilen ermöglichen, sondern gleichzeitig eine günstige Aerodynamik besitzen soll. Die erfindungsgemäße Wippe soll zumindest ein feststehendes Schleifstück sowie ein zu diesem senkrecht zur Längsachse des Fahrzeugs verstellbares Schleifstück umfassen. Insbesondere besteht das verstellbare Schleifstück aus zwei Schleifstückabschnitten, die zueinander beabstandbar angeordnet sind. Dabei sollen die Schleifstückabschnitte symmetrisch zu einer das feststehende Schleifstück mittig schneidenden Symmetrielinie angeordnet sein. Die verstellbaren Schleifstückabschnitte selbst können endseitig Auflaufhörner aufweisen. Dadurch kann die Breite der Wippe auf unterschiedliche Lichtraumprofile eingestellt werden, wobei die verstellbaren Schleifstücke zu dem feststehenden Schleifstück in Fahrtrichtung betrachtet überlappend angeordnet sind.

Der Erfindung liegt mithin die Aufgabe zugrunde, einen in der Breite verstellbaren Stromabnehmer aufzuzeigen, welcher aufgrund seiner besonderen geometrischen Gestaltung geeignet ist, die Anforderungen an die verschieden gebräuchlichen Lichtraumprofile im grenzüberschreitenden Verkehr zu erfüllen, insbesondere in Europa, z.B. in Deutschland, Österreich, der Schweiz und Frankreich.

Diese Aufgabe wird durch einen Stromabnehmer mit den Merkmalen des Patentanspruchs 1 gelöst.

Vorteilhafte Weiterbildungen der Erfindung sind Gegenstand der Unteransprüche.

Bei dem erfindungsgemäßen Stromabnehmer für elektrisch angetriebene Fahrzeuge ist eine Stromabnehmerwippe vorgesehen, die wenigstens eine quer zur Fahrtrichtung angeordnete Schleifleiste aufweist. Die Stromabnehmerwippe ist mit quer zur Fahrtrichtung angeordneten Bügeln versehen, die an ihren Enden Bügelauflaufhörner besitzen. Durch Verlagerung der Bügel mittels einer Stelleinrichtung ist die Stromabnehmerwippe in ihrer Breite verstellbar. Die Schleifleiste selbst besitzt an ihren Enden Schleifleistenauflaufhörner.

Die Bügelauflaufhörner stehen in der eingefahrenen Position der Bügel seitlich nicht über das von der feststehenden Schleifleiste und deren Schleifleistenauflaufhörnern begrenzte Lichtraumprofil vor. Das hat den Vorteil, dass die Bügelauflaufhörner in der eingefahrenen Position keinen Einfluss auf die Breite der Stromabnehmerwippe und daher auch keinen Einfluss auf die wirksame projizierte Isolationslänge haben, da diese in der eingefahrenen Position nur durch die Schleifleistenauflaufhörner bestimmt wird. In ausgefahrener Position wird die Breite durch die Bügelauflaufhörner bestimmt, so dass deren projizierte Isolationslänge maßgeblich ist. Im Ergebnis ist eine verbesserte Anpassung an die netzspezifischen Vorschriften für die jeweiligen Isolationslängen der Lichtraumprofile möglich. Gleichzeitig kann ein netzspezifisches Lichtraumprofil besser ausgenutzt werden, was auf die unterschiedlichen Geometrien der Bügelauflaufhörner und der Schleifleistenauflaufhörner zurückzuführen ist. Durch die lineare Verstellung zwischen der eingefahrenen und der ausgefahrenen Position ist es möglich, weitere dazwischen liegende Positionen definiert einzustellen.

Die Bügel sind zumindest in der eingefahrenen Position nur von der wenigstens einen Stelleinrichtung geführt und getragen. In der eingefahrenen Position unterliegt der Bügel weniger Belastungen als in der ausgefahrenen Position. Daher ist bei einer entsprechend stabilen Stelleinrichtung eine zusätzliche Führung des Bügels nicht erforderlich. Neben der Gewichtsersparnis ist ein weiterer Vorteil, dass der Bügel nicht festfrieren kann, weil er bevorzugt mit keinen weiteren tragenden Bauteilen in Kontakt kommt.

Die Stelleinrichtung erfüllt bei der Erfindung mehrere Funktionen: Die Hauptfunktion ist das Verlagern des Bügels. Da der Bügel ausschließlich an der Stelleinrichtung als tragendem Bauteil befestigt ist, hat die Stelleinrichtung zugleich die Funktion eines Trägers. Weil die Stelleinrichtung gleichzeitig zum Verlagern dient, erfüllt sie zu zudem die Führungsfunktion, die im Stand der Technik teilweise Hebelanordnungen erforderlich macht. Schließlich dient die Stelleinrichtung auch dazu, den Bügel in der gewählten Position zu arretieren und räumlich gegenüber den Schleifleisten zu fixieren, um eine unerwünschte Verstellung zu vermeiden.

Die Stelleinrichtung ist insbesondere ein pneumatisch oder hydraulisch angetriebener Aktor. Die Stelleinrichtung ist bevorzugt linear wirksam. Die Stelleinrichtung kann von einem oder mehren Hubzylindern gebildet sein.

Es ist im Rahmen der Erfindung auch möglich, dass der Bügel nicht nur in der eingefahrenen Position sondern auch in der ausgefahrenen Position ausschließlich von der Stelleinrichtung geführt und getragen ist, was mit denselben Vorteilen verbunden ist, wie sie vorstehen beschrieben worden sind.

Zur Unterstützung der Bügel in der ausgefahrenen Position kann wenigstens ein Stützlager vorgesehen sein. Das Stützlager kann an der Stromabnehmerwippe befestigt sein, insbesondere am Wippenrahmen. Vorzugsweise ist eine mit dem Bügel starr verbundene oder am Bügel angeordnete Kontaktfläche vorgesehen, die in ausgefahrener Position des Bügels auf einer Kontaktfläche des Stützlagers aufliegt. Das Stützlager soll verhindern, dass sich die Bügel unter dem Eigengewicht oder unter einer von außen auf die Bügel wirkenden Kraft zu weit biegen bzw. dass die Bügel zu weit ausgelenkt werden. Es ist eine mehrseitige Abstützung möglich, wobei eine Unterstützung von unten die größten Vorteile mit sich bringt.

Die Bügel gelangen bevorzugt nur in ihrer äußeren Position in Kontakt mit dem Stützlager. Das Stützlager ist bevorzugt in einem möglichst großen Abstand von der Stelleinrichtung angeordnet, um über weit voneinander entfernt liegende Lagerpunkte eine optimale Unterstützung der Bügel zu schaffen. Bevorzugt befinden sich die Stützlager daher an dem Schleifleistenhalter.

Das Stützlager besitzt bevorzugt eine möglichst kleine Kontaktfläche mit dem Bügel, um die Vereisungsgefahr zu minimieren. Es kann sich daher um eine linienförmige oder auch nur um eine punktuelle Unterstützung handeln, die ein leichtes Losbrechen ermöglicht. Es handelt sich bei dem Stützlager nicht um eine zusätzliche Führung, welche zwischen der eingefahrenen und der ausgefahrenen Position führt, so dass der Bügel bis zum Erreichen des Stützlagers nur durch die Stelleinrichtung geführt ist.

Das Stützlager ist in bevorzugter Ausgestaltung als Bestandteil einer Lageranordnung entweder als Aufnahme, insbesondere als Bolzenaufnahme oder als Lagerbolzen für den gegenseitigen Wirkeingriff mit einem komplementären, an dem Bügel angeordneten Gegenstück ausgebildet. Das heißt, der feststehende Teil der Lageranordnung kann als Mutterstück oder als Vaterstück ausgebildet sein, passend zum jeweiligen Gegenpart. Ein Lagerbolzen im Sinne der Erfindung besitzt bevorzugt einen kreisrunden Querschnitt. Sein Querschnitt kann aber auch unrund oder polygonförmig sein. Bei einer Bolzenaufnahme in Form einer Bohrung wird der Lagerbolzen mit hinreichendem Spiel aufgenommen, um eine Kapillarwirkung für Feuchtigkeit zu vermeiden und um die Gefahr des Festfrierens zu minimieren. Andererseits darf das Spiel in Hochrichtung auch nicht zu groß sein, damit sich die Bügel nicht zu weit nach unten durchbiegen. Der Unterschied im Durchmesser von Bolzen zu Bolzenaufnahme in einer Größenordnung von 5/10 mm sollte nicht unterschritten bzw. von 20/10 mm nicht überschritten werden.

Das Stützlager kann gemäß einer weiteren bevorzugten Ausgestaltung als Zentrierung dienen, indem der Bügel beim Ausfahren durch das Stützlager nach einer vorbestimmten Achse ausgerichtet wird. Der Lagerbolzen kann als Zentrierbolzen ausgestaltet sein, insbesondere kann seine Spitze konisch ausgebildet sein, so dass er eine Einführschräge besitzt. Zusätzlich oder alternativ kann sich die das Stützlager bildende Aufnahme in Aufnahmerichtung verjüngen, d.h. der Abstand einander gegenüberliegender Flächen des Stützlagers kann sich in Aufnahmerichtung verkleinern.

Als zusätzliche Maßnahme können der Lagerbolzen und/oder das Stützlager zumindest im Bereich ihrer gegenseitigen Kontaktflächen einen Werkstoff mit hydrophoben und/oder Schmutz abweisenden Eigenschaften aufweisen. Als hydrophob werden Werkstoffe bezeichnet, deren Kontaktwinkel größer 90° ist. Die Kontaktflächen können aus unterschiedlichen Werkstoffen bestehen, vorzugsweise aus wenigstens einem Werkstoff mit einem geringen Reibungskoeffizienten, insbesondere aus Kunststoff. Wenigstens eine der Kontaktflächen kann bevorzugt aus Polytetraflourethylen (PTFE) bestehen. PTFE ist schwierig zu benetzen und ist daher hydrophob und besitzt eine gute chemische Festigkeit gegenüber Schmutz, Fetten und aggressive Reinigungsmitteln. Die wachsartige Oberfläche von PTFE verhindert auch Anhaftungen von Eis. Die Losbrechkraft zum Verfahren der Bügel ist daher sehr gering.

Der Lagerbolzen kann insgesamt aus PTFE oder einem PTFE enthaltenden Verbundwerkstoff bestehen, oder mit PTFE beschichtet sein. Das gilt entsprechend für die Lageraufnahme, bei welcher insbesondere eine Lagerbuchse aus einen hydrophoben Kunststoff zum Einsatz kommt. Die Kontaktflächen können zudem mit einer Eisanhaftungen abweisenden Oberflächenstruktur versehen sein. Vorzugsweise ist auch die Wärmeleitfähigkeit der Werkstoffe der Kontaktflächen, insbesondere aber der ganzen Lageranordnung gering. Sie ist insbesondere niedriger als die Wärmeleitfähigkeit von Metallen, d.h. kleiner als 10 W/mK, insbesondere kleiner als 2 W/mK. Zudem soll die Wasseraufnahme gering sein, insbesondere kleiner 0,1 Gew.-%, bevorzugt kleiner 0,01 Gew.-%. Der Einsatz von Materialien mit geringer Wärmeleitfähigkeit empfiehlt sich, da an solchen Materialien die Betauung weniger stark auftritt und die für Eisbildung notwendige Wärmeabfuhr verzögert erfolgt. Insbesondere eignen sich polymere Gleitlagerwerkstoffe, wie sie z.B. unter der Handelsbezeichnung iglidur® J von der Firma igus GmbH, 51147 Köln, Deutschland, angeboten werden.

Gemäß einer weiteren vorteilhaften Ausgestaltung weist das Stützlager in Aufnahmerichtung und entgegen der Aufnahmerichtung Öffnungen auf. Es wird als vorteilhaft angesehen, wenn die Bolzenaufnahme in Form einer Bohrung nicht als Sackloch, sondern als Durchgangsbohrung gestaltet ist. Der Vorteil ist, dass etwaige Ablagerungen aus der Durchgangsbohrung beim Einschieben der Lagerbolzens verdrängt werden und die Bolzenaufnahme nicht wie bei einem Sackloch verstopfen können. Der Lagerbolzen kann zu diesem Zweck auch ein Stück aus der Bolzenaufnahme herausragen. Beim Zurückziehen des Bolzens werden etwaige Anhaftungen des Bolzens ebenso abgestreift, so dass das Ein- und Ausfahren der Bügel auch zu einer Selbstreinigung der Lageranordnung führt. Der Lagerbolzen ist aus Gründen der einfacheren Wartung austauschbar befestigt. Bevorzugt sind die gegenseitigen Kontaktflächen klein. Daher können auch die Querschnitte von Lagerbolzen und Stützlager klein sein. Durch die kleinen Kontaktflächen wird die bei einem etwaigen Festfrieren aufzubringende Losbrechkraft reduziert.

In bevorzugter Ausgestaltung liegen sich die inneren, benachbarten Enden der Bügel quer zur Fahrtrichtung unmittelbar gegenüber. In der eingefahrenen Position befinden sich die Enden dabei zwischen beiderseits der beiden Enden angeordneten Stelleinrichtungen, die jeweils mit einem der beiden Bügel verbunden sind. Diese Anordnung hat den Vorteil, dass die Enden der Bügel in der eingefahrenen Position sehr nah aneinander liegen können, so dass die Bügel sehr weit eingefahren werden können, damit sie nicht über das von der Schleifleiste und den Schleifleistenauflaufhörnern begrenzte Profil vorstehen.

Die Stelleinrichtungen sind bevorzugt sehr nah neben den Bügeln angeordnet, damit keine langen Verbindungselemente zwischen der Stelleinrichtung und dem zugehörigen Bügel erforderlich sind. Dadurch wird Bauraum und Gewicht gespart.

Die Höhe der Stromabnehmerwippe muss durch die zusätzlichen Stelleinrichtungen nicht verändert werden, da sich die Stelleinrichtungen und die Enden der Bügel in derselben Horizontalebene befinden.

Die Stelleinrichtungen mit den daran befestigten Bügeln sind mit Stelleinrichtungshaltern verbunden. Über die Stelleinrichtungshalter wird das Gewicht der Bügel und der Stelleinrichtungen aufgenommen. Sie sind wiederum mit den federnd gelagerten Schleifleistenträgern verbunden.

Die Stelleinrichtungshalter besitzen eine Aufnahme. In diese Aufnahme können die Enden der Bügel verlagert werden. Hierzu ist die Aufnahme bevorzugt nach oben offen und besitzt zwei nach oben weisende Schenkel, die über einen Steg miteinander verbunden sind. Die Aufnahme ist daher im Querschnitt bogenförmig, z.B. U-förmig oder V-förmig. Die Stelleinrichtungen sind an den seitlichen Schenkeln des Stelleinrichtungshalters gelagert.

Die Stelleinrichtungen besitzen lang gestreckte Gehäuse. Jeweils ein Stelleinrichtungshalter ist im Bereich des Endes eines Gehäuses angeordnet. In praktischer Ausführung sind z.B. zwei Hubzylinder mittels der beiden Stelleinrichtungshalter befestigt. Die Kolbenstangen der Hubzylinder sind in entgegengesetzte Richtungen ausfahrbar. An jeder der Kolbenstangen ist ein Ende eines Bügels befestigt. Das Verbindungselement, mit welchem die Kolbenstange an dem Bügel befestigt ist, befindet sich im Abstand von der inneren Stirnseite des Bügels, und zwar so weit, dass der Bügel entsprechend dem Abstand des Verbindungselements von der Stirnseite zwischen die Stelleinrichtungen verlagerbar ist.

Es sind im Bereich der sich gegenüberliegenden Enden zweier Bügel also zwei Stelleinrichtungen und zwei Stelleinrichtungshalter angeordnet. Weil Stromabnehmer in der Regel zwei parallele Schleifleisten haben, zwischen denen ein U- oder Y-förmiger Bügel angeordnet ist, besitzt jeder Bügel zwei Enden und wird daher über zwei Stelleinrichtungen geführt und gehalten. Folglich gibt es vier Stelleinrichtungshalter. Diese können wiederum paarweise miteinander verbunden sein, z.B. durch sich in Fahrtrichtung erstreckende Querstreben. Weitere Verbindungsstreben erstrecken sich als Längsstreben parallel zu den Schleifleistenträgern. Dabei muss nicht jeder Stelleinrichtungshalter mit jedem Schleifleistenträger verbunden sein. Da immer zwei Stelleinrichtungsträger auch über zwei Stelleinrichtungen verbunden sind, ergibt sich eine in sich ausgesteifte Baugruppe, so dass jeweils nur ein Stelleinrichtungsträger mit dem benachbarten Schleifleistenträgern verbunden werden kann. Zusammen mit den in Fahrtrichtung weisenden Querstreben ergibt sich ein fachwerkartiger Verbund, der relativ leicht, aber biegesteif ist und daher bei geringem Platzbedarf hoch belastbar ist.

Ein weiterer Vorteil ist, dass in der eingefahrenen Position ein Stromübertragungssystem nur mit dem wenigstens einen einzigen Schleifstück, nachfolgend Hauptschleifstück genannt, benutzt werden kann, und dennoch eine sehr gute Anpassung an unterschiedliche Lichtraumprofile gegeben ist.

In einer Weiterbildung der Erfindung kann die Schleifleiste ein Hauptschleifstück tragen, wobei an den Bügeln Ergänzungsschleifstücke angeordnet sind. Die Ergänzungsschleifstücke sind gegenüber dem Hauptschleifstück in entgegengesetzte Richtungen verlagerbar. Durch die Kombination des wenigstens einen Hauptschleifstücks mit zwei Ergänzungsschleifstücken kann in der ausgefahrenen Position ein weiteres Stromsystem benutzt werden. Der erfindungsgemäße Stromabnehmer kann durch die Unterschiede in der Kontur des Hauptschleifstücks gegenüber der Kontur der Kombination von Hauptschleifstück und Ergänzungsschleifstück das vorgegebene Lichtraumprofil von wenigstens zwei Stromübertragungssystemen optimal ausnutzen.

Im Rahmen der Erfindung wird es als vorteilhaft angesehen, wenn alle am Grundrahmen und an der Stromabnehmerwippe für die Verstellung der Breite und die Positionsbestimmung benötigten Mittel pneumatisch oder auch hydraulisch wirksam sind. Auf diese Weise sind außerhalb des Fahrzeugs keine elektrisch wirksamen Aktuatoren oder Sensoren erforderlich, die in irgendeiner Weise abgeschirmt werden müssten. Die gesamte Aktuatorik und Sensorik, die für die Breitenverstellung einer Stromabnehmerwippe notwendig ist, lässt sich bei gegebener Betriebssicherheit rein pneumatisch oder hydraulisch realisieren.

Die pneumatische oder hydraulische Steuerung bzw. die Umwandlung eines pneumatischen oder hydraulischen Signals in ein elektrisches Signal erfolgt erst in dem Fahrzeug selbst, wo das am Stromabnehmer anliegende Spannungspotential von max. 25 kV Nennspannung die Steuerung nicht beeinflussen kann.

Nachfolgend wird der Begriff Lichtraumprofil vereinfachend durch Profil abgekürzt.

Es gibt eine Vielzahl von Möglichkeiten, die verschiedenen Profile durch verstellbare Bügel und/oder verstellbare Schleifleisten abzubilden, wobei eine Profilüberschreitung vermieden werden muss, eine Profilunterschreitung aber ebenso vermieden werden soll. Aufgrund der unvermeidbaren Wankbewegungen des Fahrzeugs hat sich jedoch gezeigt, dass eine besondere Abstimmung im Übergangsbereich zwischen der Geometrie der Bügelauflaufhörner und der Schleifleistenauflaufhörner wichtig ist. Die Übergangswinkel zwischen den jeweils wirksamen Schleifstücken und den jeweils wirksamen Auflaufhörnern haben Einfluss auf eine aus dem aufliegenden Fahrdraht resultierende Kraftkomponente in Y-Richtung, d. h. auf eine Krafteinwirkung quer zur Fahrtrichtung. Insbesondere spielt auch der Übergangsbereich zwischen den schwenkbaren Ergänzungsschleifstücken und dem Hauptschleifstück eine große Rolle, da auch die Übergangswinkel zwischen diesen Schleifstücken Einfluss auf die Kraftkomponente in Y-Richtung haben.

Die eingefahrene Position bedeutet eine Einstellung auf eine Breite SB1. Die Schleifleiste bzw. das Hauptschleifstück und die Schleifleistenauflaufhörner bestimmen das Profil der Stromabnehmerwippe in der eingefahrenen Position allein.

In der ausgefahrenen Position, d.h. bei der Breite SB2, stehen die Bügelauflaufhörner seitlich vollständig über die Schleifleistenauflaufhörner vor. Dabei ist die Breite des Schleifstücks durch die seitlich verlagerten Ergänzungsschleifstücke vergrößert. In der ausgefahrenen Position treten also die Schleifleistenauflaufhörner hinter die Bügelauflaufhörner zurück. Auf diese Weise ist für die eingefahrene und für die ausgefahrene Position eine ideale Anpassung an die jeweiligen Lichtraumprofile möglich, ohne dass es zu Überlappungen zwischen den einzelnen Auflaufhorngeometrien kommt, was zu ungeeignet hohen Übergangswinkeln zwischen den Auflaufhörnern führen könnte, die wiederum zu erhöhten Kraftkomponenten in Y-Richtung führen würden.

In vorteilhafter Ausgestaltung stehen die Bügelauflaufhörner daher in der eingefahrenen Position der Bügel nach oben bzw. in Richtung der Oberleitung nicht über das von der Schleifleiste und den Schleifleistenauflaufhörnern begrenzte Profil vor.

Um den Schaden am Stromabnehmer und an der Oberleitung im Falle eines Schleifleistenbruchs oder zu weit abgenutzter Schleifleisten möglichst gering zu halten, können vorzugsweise das Hauptschleifstück und/oder die Ergänzungsschleifstücke mit einer automatischen Senkeinrichtung (AS bzw. ADD) verbunden werden. Die pneumatisch wirkende, automatische Senkeinrichtung soll bei Bruchschäden an den Schleifstücken den am Fahrdraht anliegenden Stromabnehmer selbsttätig senken und somit Folgeschäden an der Oberleitung und am Stromabnehmer vermeiden. Die Schleifstücke werden dazu jeweils mit einem Kanal versehen, der über ein Leitungssystem mit Druckluft aus dem Stromabnehmerantrieb versorgt wird. Entweicht Druckluft aus den Schleifstücken infolge eines Schadens, wird der Hubantrieb des Stromabnehmers über ein Schnellsenkventil entlüftet. Im Schadensfall wird somit durch das ADD-System der Stromabnehmer mittels Schnellabsenkung von der Oberleitung getrennt.

In der eingefahrenen sowie ausgefahrenen Position muss die Stromübertragung von der Oberleitung zum Stromabnehmer sicher gewährleistet sein. Eine elektrische Verbindung des Hauptschleifstücks mit den Ergänzungsschleifstücken sorgt für eine qualitativ gute Stromübertragung. Diese elektrische Verbindung kann vorzugsweise mittels Stromlitzen hergestellt werden, deren Enden zum einen an dem Hauptschleifstück und zum anderen an den Ergänzungsschleifstücken befestigt sind. Die Stromlitze gewährleistet z.B. bei ausgefahrenem Stromabnehmer den Stromfluss der Oberleitung, welche sich durch ihren Zick-Zack-förmigen Verlauf temporär auch nur auf dem Ergänzungsschleifstück befinden kann. Somit wird auch sichergestellt, dass der Stromfluss nicht unkontrolliert über andere, leitende Bauteile fließt, die nicht zur Stromübertragung vorgesehen sind. Die Erfindung schließt es jedoch nicht aus, dass anstelle von Stromlitzen andere elektrische Verbindungen teilweise oder vollständig an der Stromübertragung teilhaben. Bei entsprechender Ausgestaltung ist eine Stromübertragung im Bereich von Führungen und Lagerungen möglich.

Die Bügelauflaufhörner der verstellbaren Bügel und die feststehenden Schleifleistenauflaufhörner können jeweils gerade Abschnitte aufweisen, die jeweils einen gegenüber der Horizontalen gemessenen Auflaufhornwinkel besitzen. Es wird als vorteilhaft angesehen, wenn der Auflaufhornwinkel der Bügelauflaufhörner größer ist als der Auflaufhornwinkel der Schleifleistenauflaufhörner. Für eine optimale Profilanpassung wird es als zweckmäßig angesehen, wenn der Auflaufhornwinkel z.B. bei 1450 mm Breite 38° bis 40° beträgt, während der Auflaufhornwinkel z.B. bei 1950 mm Breite 28° bis 30° beträgt.

Die Wahl dieser Auflaufhornwinkel erfolgte insbesondere zur Anpassung an die Lichtraumprofile, die bei den Wippenbreiten SB1 bzw. SB2 (SB = Stellbreite) vorausgesetzt werden. Die Stromabnehmerwippe ist durch Verlagerung der Bügel mindestens zwischen diesen beiden Breiten als Extremwerte verstellbar. Eine Einstellung weiterer Wippenbreiten zwischen den Extremwerten SB1 und SB2 ist möglich.

In diesem Zusammenhang setzt sich die wirksame Schleifleistenlänge aus der Schleifleiste und den Ergänzungsschleifstücken zusammen und kann auf bis z.B. 1.030 mm verlängerbar sein.

Ein weiterer wesentlicher Aspekt unterschiedlicher Wippenprofile ist, dass die Auflaufhörner (Schleifleistenauflaufhörner und Bügelauflaufhörner) mit elektrisch isolierten Bereichen versehen sind. Bevorzugt sind die auf eine Horizontalebene projizierten Längen der Schleifleistenauflaufhörner und der Bügelauflaufhörner unterschiedlich. Die Isolierung bestimmt die nutzbare elektrische Arbeitsbreite des Stromabnehmers, die über die reine Breite der Schleifleiste hinausgeht.

Die Winkel zwischen Hauptschleifstück und Ergänzungsschleifstücken bzw. zwischen Ergänzungsschleifstücken und Bügelauflaufhorn sind so gering wie möglich zu halten, um Querkräfte zu minimieren. Der Winkel wird als Übergangswinkel bezeichnet. Es ist von Vorteil, wenn der in einer Vertikalebene gemessene Übergangswinkel zwischen den Ergänzungsschleifstücken und dem die Ergänzungsschleifstücke tragenden Bügelauflaufhorn ≤ 30° ist. Insbesondere ist der Übergangswinkel ≤ 20° oder ≤ 15° und vorzugsweise ≤ 10°. Der Übergangswinkel zwischen den Ergänzungsstücken und dem wenigstens eines Hauptschleifstück ist vorzugsweise ≤ 10°

Entsprechend der Massenverteilung eines Stromabnehmers kann ein Modell mit den zugehörigen Massen-, Feder- und Dämpfungskennwerten gebildet werden. Die Masse eines Stromabnehmers kann in drei wesentliche Massen m1, m2 und m3 unterteilt werden. Die Masse m1 umfasst die reduzierten Massen der Wippe, die direkt am Fahrdraht anliegen und bildet sich dabei hauptsächlich aus der Masse der Schleifleisten, den Verbindungsstegen zwischen den Schleifleisten, dem 50%-Anteil an der Wippenfederung und dem Anteil an den Stromverbindern im Wippenbereich. Die Masse m2 vereinigt alle im Scheitelpunkt des Scheitelrohres wirkenden Massen, d.h. alle Anbauteile im Bereich des Scheitelrohres, die restlichen Anteile an Stromverbindern und Wippenfedern und zusätzlich jeweils 1/4 der Massen des Oberarmes und der Wippenführung. Die Masse m3 bildet sich aus der vertikal schwingenden Masse des Stromabnehmergestells. In erfindungsgemäßer Weiterbildung sind die Bügel zusammen mit den Ergänzungsschleifstücken Teil der gemeinsam gefederten Masse m1.

Darüber hinaus wird es als zweckmäßig angesehen, wenn ein Übergangsradius zwischen dem geraden Abschnitt des Bügelauflaufhorns und einem das Schleifstück tragenden oberen Abschnitt des Bügelauflaufhorns 260 mm +/- 50 mm beträgt.

In vorteilhafter Weiterbildung liegt ein unterer Übergangsradius zwischen dem geraden Abschnitt des Bügelauflaufhorns und einem demgegenüber nach unten abgewinkelten Ende in einem Bereich von 58 mm +/- 10 mm. Durch die gewählten Radien kann eine optimale Profilanpassung erreicht werden. Zudem kann der Übergangsradius zwischen einem geraden Abschnitt des Schleifleistenauflaufhorns und einem demgegenüber nach unten abgewinkelten unteren Ende des Schleifleistenauflaufhorns in einem Bereich von 140 mm +/-10 mm liegen. Das abgewinkelte untere Ende befindet sich dabei vorzugsweise auf der gleichen Höhe wie das untere Ende der Bügelauflaufhörner, so dass die Bügelauflaufhörner in der eingefahrenen Position auch nach unten hin nicht über das Lichtraumprofil der Schleifleistenauflaufhörner vorstehen. Die Länge der Enden kann dabei so gewählt sein, dass sich die gegenüber den geraden Abschnitten der Schleifleistenauflaufhörner nach unten abgewinkelten Enden der Schleifleistenauflaufhörner über eine größere Höhe als die entsprechenden Enden der Bügelauflaufhörner erstrecken, ohne dabei über die Enden der Bügelauflaufhörner nach unten vorzustehen. Die größere Erstreckung der unteren Enden der Schleifleistenauflaufhörner muss nicht zwangsläufig bedeuten, dass diese sich über einen längeren Bereich in Vertikalrichtung erstrecken. Der relativ große Übergangsradius an den Schleifleistenauflaufhörnern von 140 mm +/- 10 mm im Verhältnis zu dem kleineren Radius an den Bügelauflaufhörnern führt dazu, dass die Enden der Schleifleistenauflaufhörner quasi Ausläufer des gekrümmten Bereichs der Schleifleistenauflaufhörner sind.

Die Bügelauflaufhörner selbst können U-förmig konfiguriert sein. Das ist so zu verstehen, dass zwei auf einer Fahrzeugseite angeordnete Bügel, die jeweils einer von zwei im Abstand aneinander angeordneten Ergänzungsschleifstücken zugeordnet sind, über Bügelauflaufhörner miteinander verbunden sind. In der Draufsicht von oben ergibt sich dadurch ein im Wesentlichen U-förmiger Verlauf, welcher in der Seitenansicht den Anforderungen an die jeweiligen Lichtraumprofile genügt.

In alternativer Ausführungsform können die Bügelauflaufhörner auch Y-förmig konfiguriert sein. Das bedeutet, dass die Bügel einen quer zur Fahrtrichtung abstehenden Schenkel besitzen entsprechend dem unteren Arm des Buchstabens Y. Die beiden oberen Arme des Buchstabens Y sind mit den jeweiligen verstellbaren Bügeln verbunden. Es gibt also einen V- oder U-förmigen Teil verbunden mit einem einschenkeligen Längenabschnitt. Unabhängig davon, ob die Bügelauflaufhörner U-förmig oder Y-förmig konfiguriert sind, ergibt sich kein Unterschied in der Anpassung an die jeweiligen Lichtraumprofile. Die Radien und Übergangsbereiche können bei Y- und U-förmigen Bügeln identisch gewählt werden. Der einzige Unterschied besteht darin, dass der Scheitelpunkt eines U-förmigen Bügelauflaufhorns nicht im Bereich des nach unten abgewinkelten Endes liegt, sondern im Abstand hiervon etwa auf halber Länge des Bügelauflaufhorns. Hier befindet sich vorzugsweise ein gerader Abschnitt des Bügelauflaufhorns. Dieser Bereich bietet sich für eine Anbindung des unteren Schenkels des Bügelauflaufhorns an.

Da die Bügel in entgegengesetzte Richtung zueinander verstellbar sein sollen, ist es aus steuerungstechnischer Sicht und auch aus Sicherheitsaspekten zweckmäßig, Positionserfasser vorzusehen, die zur Bestimmung der Position der Bügel in abgesenkter und/oder angehobener Stellung des Stromabnehmers vorgesehen sind. Die Positionserfasser wirken in einer ersten Ausführungsform mit Positionsgebern zusammen, die in abgesenkter Stellung der Stromabnehmerwippe in Wirkeingriff mit mehreren Positionserfassern am Grundrahmen bringbar sind.

Die Bügel sind in der gewünschten Position verriegelbar, insbesondere über pneumatisch oder hydraulisch angetriebene Aktoren. Es kann sich hierbei um die Stelleinrichtungen selbst handeln. Die Erfindung umfasst allerdings auch die Möglichkeit, zusätzliche Aktoren vorzusehen, die mit Verriegelungsmitteln in Wirkeingriff bringbar sind. Wenn der Stromabnehmer sich in der angehobenen Stellung befindet, müssen die Verriegelungsmittel blockiert sein. Dadurch ist gewährleistet, dass sich die Bügel in angehobener Stellung, d.h. im laufenden Betrieb, nicht mehr verlagern können. Es ist aber auch denkbar, dass der Bügel abgesenkt ist, weil ein anderer Stromabnehmer in Betrieb ist. In diesem Fall muss der Bügel auch in abgesenkter Position verriegelt sein.

Die Erfindung sieht in vorteilhafter Weise vor, dass eine Endlage von pneumatischen Stelleinrichtungen ohne zusätzliche Sensormittel, wie z.B. Rollenhebelventile erfasst wird. Die pneumatischen Stelleinrichtungen sind hierzu als doppelt wirkende Kolben-Zylinder-Einheiten ausgeführt. Die Endlage des Kolbens kann durch zwei Steuerleitungen erfasst werden, die an den Zylinder angeschlossen sind. Der Anschluss einer ersten Steuerleitung am Zylinder ist dabei so positioniert, dass er nur bei ausgefahrenem Kolben fluidleitend mit dem Kolbenbodenraum in Verbindung steht. Der Anschluss einer zweiten Steuerleitung am Zylinder ist dabei so positioniert, dass er nur bei eingefahrenem Kolben fluidleitend mit dem von der Kolbenstange durchsetzen Ringraum in Verbindung steht. Zusätzlich sind eine erste und eine zweite Versorgungsleitung mit dem Ringraum bzw. dem Bodenraum verbunden. Die Anschlüsse der Steuerleitungen liegen zwischen den Anschlüssen der Versorgungsleitungen in dem Sinne, dass der Abstand der Anschlüsse der Steuerleitungen kleiner ist.

In der eingefahrenen Position trennt eine Dichtung des Kolbens die zweite Steuerleitung vom Bodenraum des Kolbens und damit von der zweiten Versorgungsleitung. Wird die zweite Versorgungsleitung zum Bodenraum mit Druck beaufschlagt fährt der Kolben aus. Die erste Versorgungsleitung wird dabei entlüftet. Der Kolben überfährt dann mit seiner Dichtung den Anschluss der zweiten Steuerleitung, so dass an der zweiten Steuerleitung ein Druckanstieg festgestellt werden kann. Der Druckanstieg bedeutet, dass der Kolben nicht mehr in der Endstellung ist. Wenn der Kolben dann den Anschluss der ersten Steuerleitung überfährt, kann auch in der ersten Steuerleitung ein Druckanstieg festgestellt werden. Der Kolben hat seine Endstellung erreicht, was sich aus der Position des Anschlusses der ersten Steuerleitung nahe der ausgefahrenen Endstellung ergibt. In dieser Stellung liegt Druck an beiden Steuerleitungen und der zweiten Versorgungsleitung an. Nur an der ersten Versorgungsleitung liegt kein Druck an.

Zum Einfahren des Kolbens wird die erste Versorgungsleitung mit Druck beaufschlagt. Die zweite Versorgungsleitung wird entlüftet. Mit dem Überfahren des Anschlusses der ersten Steuerleitung und anschließend der zweiten Steuerleitung steigt der Druck in den beiden Steuerleitungen zeitlich nacheinander an. Der Druckanstieg und die Reihenfolge des Druckanstiegs signalisiert die Bewegungsrichtung und das Erreichen der eingefahrenen Endstellung.

Die Druckänderungen werden von Drucksensoren, vorzugsweise von Druckschaltern erfasst. Die Versorgungsleitungen werden je nach gewünschter Position des Kolbens ständig mit Druck beaufschlagt und ebenfalls von Drucksensoren, insbesondere Druckschaltern überwacht. Falls der Druck in einer der Steuerleitungen unter einen vorgegebenen Wert fällt, wird eine Fehlermeldung ausgegeben.

Die Positionserfassung des Bügels ergibt sich durch die Lageerfassung des Kolbens und ist gewissermaßen in die Stelleinrichtung integriert und benötigt bis auf die Steuerleitungen minimalen Bauraum bei minimalem Gewicht. Sie ist vor Umwelteinflüssen geschützt. Es besteht prinzipbedingt keine Gefahr von Verschmutzungen oder Vereisungen, so dass das Risiko von Fehlermeldungen minimiert ist.

Eine ADD-Abfrage der verschiebbaren Schleifleistenstücke kann mit vorstehend geschilderten, pneumatischen Endlagenerfassung verknüpft sein. Hierzu kann eine Versorgungsleitung zum Ausfahren des Bügels bzw. Kolbens mit der Druckleitung zu dem zugehörigen Schleifstück verbunden sein. Fällt der Druck an der Versorgungsleitung ab, ohne dass eine aktive Umstellung (Einfahren/Ausfahren) vorgenommen worden ist, bedeutet das, dass eine Undichtigkeit im System vorhanden ist. Eine Undichtigkeit tritt auf, wenn der ADD-Kanal der verschiebbaren Schleifstücke durch Verschleiß oder Kollision freiliegt. Diese Situation führt zu einer Fehlermeldung "Stromabnehmer senken", falls das ADD nicht anspricht. Es ist zu beachten, dass die ADD-Abfrage nur in der ausgefahrenen Position der verschiebbaren Schleifleistenstücke benötigt wird und auch nur in dieser Position aktiviert ist. Daher eignet sich die Versorgungsleitung in besonderer Weise zur Erfassung des Drucks im ADD-System.Die Erfindung wird nachfolgend anhand von in den schematischen Zeichnungen dargestellten Ausführungsbeispielen näher erläutert. Es zeigt:
- Figur 1: einen Stromabnehmer mit nach außen verlagertem Wippenprofil in Frontansicht;
- Figur 2: eine Stromabnehmerwippe in der ausgefahrenen Position in perspektivischer Ansicht;
- Figur 3: eine Stromabnehmerwippe in der eingefahrenen Position in perspektivischer Ansicht;
- Figur 4: die Stromabnehmerwippe der Figur 2 in der Seitenansicht;
- Figur 5: die Stromabnehmerwippe der Figur 2 in der Draufsicht;
- Figur 6: die Stromabnehmerwippe der Figur 2 in einer Stirnansicht;
- Figur 7: einen vergrößerten Ausschnitt eines Endbereichs der Stromabnehmerwippe der Figuren 1 bis 6 in der Frontansicht;
- Figur 8: in perspektivischer Ansicht einen Teil einer Stromabnehmerwippe in eingefahrener Position;
- Figur 9: die Stromabnehmerwippe der Figur 8 in ausgefahrener Position und
- Figur 10: eine Stelleinrichtung für eine Stromabnehmerwippe im Längsschnitt.

In den Figuren werden für gleiche oder ähnliche Bauteile dieselben Bezugszeichen verwendet, auch wenn eine wiederholte Beschreibung aus Vereinfachungsgründen entfällt

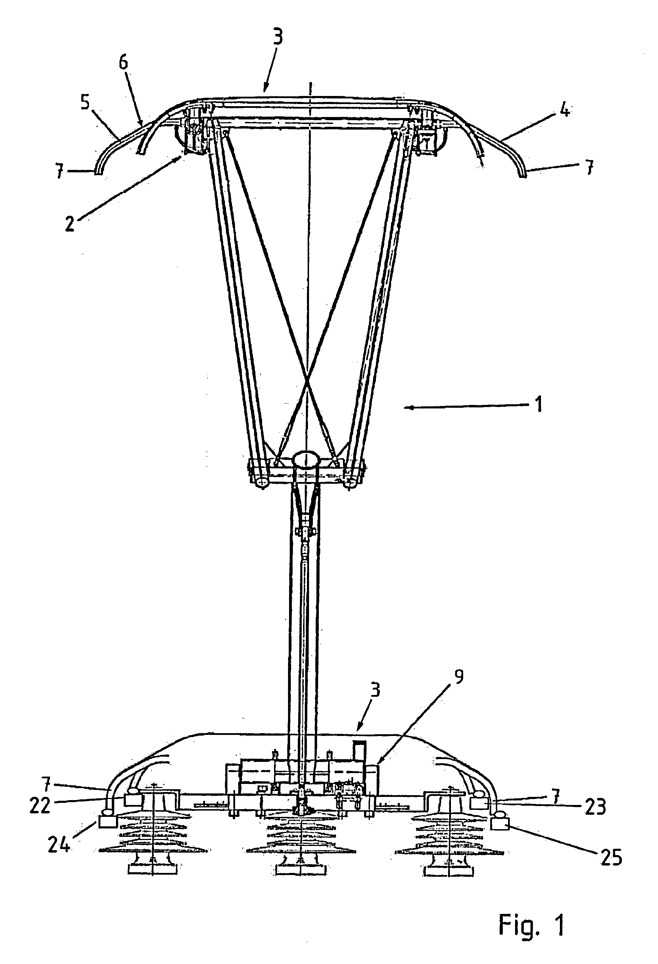

Figur 1 zeigt einen Stromabnehmer 1 für ein nicht näher dargestelltes Schienenfahrzeug. Der Stromabnehmer 1 dient zur Kontaktierung eines Fahrdrahts einer Oberleitung. Der Stromabnehmer 1 ist ein Einholm-Stromabnehmer, der an seinem oberen Ende eine Stromabnehmerwippe 2 mit ein oder mehreren Schleifleisten 3 und einem oder mehreren Bügeln 4, 5 offenbart, die gemeinsam eine Bügelanordnung 6 bilden. Bei dieser Ausführungsform sind die Bügel 4, 5 zwischen den beiden Schleifleisten 3 angeordnet. Die Endabschnitte der Bügel 4, 5 werden als Bügelauflaufhörner 7 bezeichnet.

Figur 1 lässt darüber hinaus erkennen, wo sich die Stromabnehmerwippe 2 in der abgesenkten Position befindet. Die Auflaufhörner 7 sowie die Schleifleiste 3 sind ansatzweise in der Nähe eines Grundrahmens 9 dargestellt, welcher als Bestandteil des Stromabnehmers 1 am Fahrzeug befestigt ist. Positionserfasser 22, 23, 24, 25, die symbolisch den Enden der Bügelauflaufhörner 7 in der eingefahrenen und der ausgefahrenen Position zugeordnet sind, dienen dazu, die jeweilige Position der Bügel 4, 5 zu bestimmen. Das Gestänge des Stromabnehmers 1 umfasst in diesem Ausführungsbeispiel einen Oberarm mit zwei Holmen, eine Lenkerstange und einen Unterarm mit einem Holm. Bei der vorliegenden Erfindung kommt es maßgeblich auf die Konfiguration der Stromabnehmerwippe 2 an. Die nachfolgenden Figuren beziehen sich somit auf Stromabnehmerwippen, wie sie beispielsweise bei einem in Figur 1 dargestellten Stromabnehmer 1 zum Einsatz kommen können.

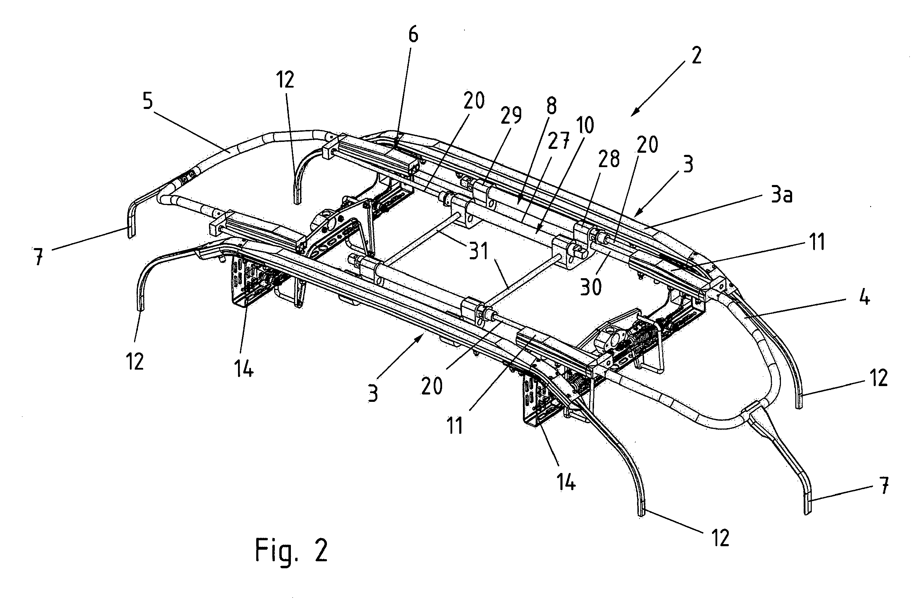

Figur 2 zeigt eine Stromabnehmerwippe 2 in einer perspektivischen Ansicht. Die Stromabnehmerwippe 2 ist Bestandteil des in Figur 1 dargestellten Stromabnehmers. Die Stromabnehmerwippe 2 umfasst zwei quer zur Fahrtrichtung angeordnete Schleifleisten 3. Zwischen den Schleifleisten 3 befindet sich die Bügelanordnung 6 bestehend aus zwei in entgegengesetzte Richtungen verlagerbaren Bügeln 4, 5.

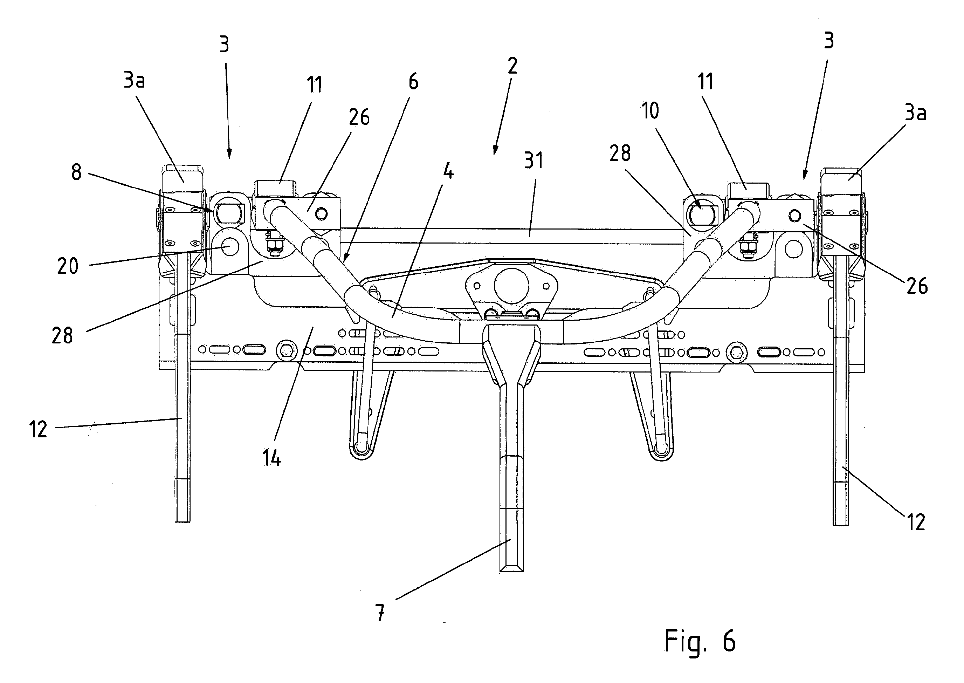

Die Schleifleisten 3 umfassen jeweils ein Hauptschleifstück 3a sowie zwei gegenüber dem Hauptschleifstück 3a quer zur Fahrtrichtung verlagerbare, schwenkbare Ergänzungsschleifstücke 11, die an den Bügeln 4, 5 befestigt und zusammen mit den Bügeln 4, 5 quer zur Fahrtrichtung verlagerbar sind. Insgesamt gibt es vier verlagerbare Ergänzungsschleifstücke 11 und zwei Hauptschleifstücke 3a (Figuren 2-6).

Die Bügel 4, 5 sind im Wesentlichen Y-förmig konfiguriert, was durch ein so genanntes Bügelauflaufhorn 7 bedingt ist. Das Bügelauflaufhorn 7 erstreckt sich zwischen den beiden Ergänzungsschleifstücken 11 auf einer Seite der Stromabnehmerwippe 2 (Figuren 2 bis 6).

Die gesamte Anordnung ist bezüglich der Mittellängsachse der Stromabnehmerwippe 2, also in Fahrtrichtung, spiegelsymmetrisch ausgebildet.

Bei der Erfindung kommt es unter anderem auf die Konturierung der Bügelauflaufhörner 7 an, die einem bestimmten Lichtraumprofil genügen müssen, insbesondere dem Begrenzungsprofil gemäß EN 50367 B3.

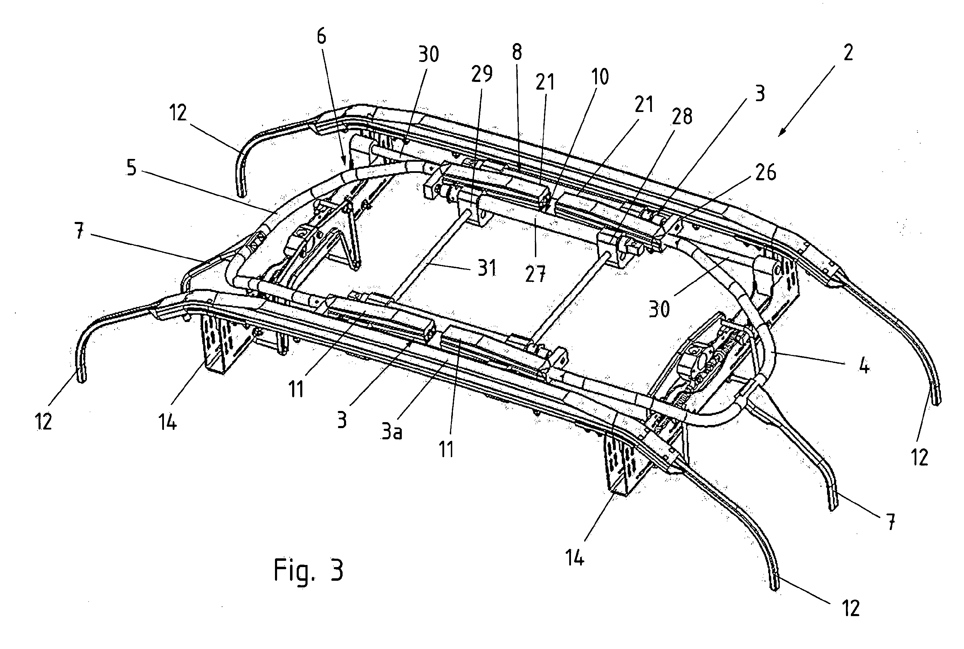

In Figur 2 befinden sich die Bügel 4, 5 in der äußeren Position. Es ist zu erkennen, dass die nach unten gekrümmten Bügelauflaufhörner 7 über Schleifleistenauflaufhörner 12 der Schleifleiste 3 in der Breite vorstehen. Anhand der Gegenüberstellung der Figuren 2 und 3 ist zu erkennen, dass die Bügelauflaufhörner 7 gegenüber den Schleifleistenauflaufhörnern 12 vollständig zurücktreten, wenn sich die Bügelauflaufhörner 7 in der inneren, eingefahrenen Position befinden. Die Bügelauflaufhörner 7 stehen dann weder seitlich noch in der Höhe über die Schleifleiste 3 und über die Schleifleistenauflaufhörner 12 vor. In der Figur 3 ist sogar eine Profilunterschreitung im Bereich der Bügelauflaufhörner 7 zu erkennen, was aber nicht nachteilig ist, da das Lichtraumprofil in der eingefahrenen Position ausschließlich durch die Geometrie der Schleifleiste 3 und die Schleifleistenauflaufhörner 12 bestimmt ist.

Die Verstellung der Bügel 4, 5 erfolgt in einer abgesenkten Position des Stromabnehmers. Die zu Figur 1 erläuterten Positionserfasser 22-25 liefern die für die Verstellung notwendigen Eingangssignale.

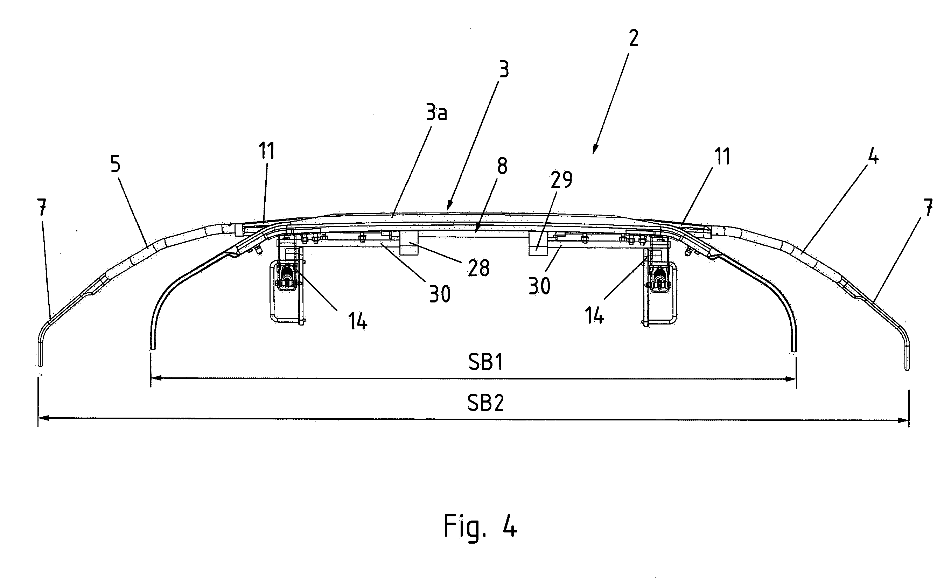

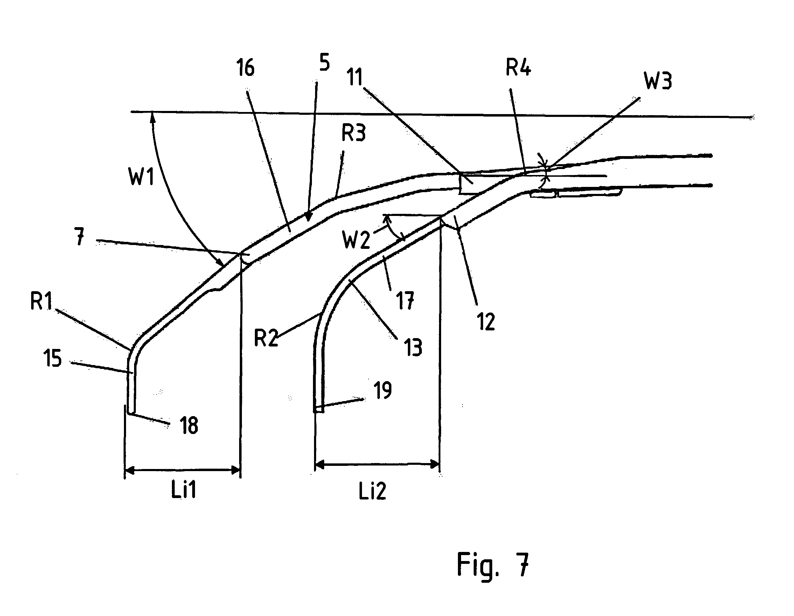

Die besondere Geometrie der Bügelauflaufhörner 7 setzt sich aus verschiedenen Abschnitten zusammen. Angefangen im mittleren Bereich ergibt sich im Ausführungsbeispiel der Figur 4 zunächst eine Verbreiterung der Schleifleiste 3 auf bis zu 1.030 mm, weil die Ergänzungsschleifstücke 11 seitlich über die Hauptschleifstücke 3a vorstehen. Die Ergänzungsschleifstücke 11 erstrecken sich jeweils bis an einen leitenden Bereich des Bügels 5. Die Bügelauflaufhörner 7 besitzen in ihren Endbereichen jeweils ein isoliertes Teilstück 15 (Figur 7), das sich über eine projizierte Länge Li1 von min. 150 mm erstreckt. Auch die Schleifleiste 3 besitzt ein solches isoliertes Teilstück 13 (Figur 7), allerdings mit einer projizierten Länge Li2 von 165 bis 190 mm. Die Isolierung ist nur außenseitig vorgesehen. Das Y-förmig konfigurierte Bügelauflaufhorn 7 ist innenseitig elektrisch leitend, so dass ein elektrischer Kontakt zwischen den zwei Ergänzungsschleifstücken 11 über das jeweilige Bügelauflaufhorn 7 besteht. Das Bügelauflaufhorn 7 ist durch die Y-Form in einem inneren Teilbereich zweischenkelig ausgeführt und in einem endseitigen Teilstück einschenkelig. Das hat den Vorteil, dass nur der Schenkel 15, der das endseitige Teilstück bildet, elektrisch isoliert ausgeführt werden muss, während der bogenförmige Abschnitt 4, 5 des Bügelauflaufhorns 7 leitend, also elektrisch nicht isoliert ausgeführt werden kann.

Alternativ kann ein U-förmiges Bügelauflaufhorn mit entsprechend isolierten Teilbereichen vorgesehen sein, wobei auch bei dieser Bauform das Bügelauflaufhorn innenseitig elektrisch leitend ist, um die Ergänzungsschleifstücke elektrisch miteinander zu verbinden.

In Figur 7 ist gezeigt, dass das Bügelauflaufhorn 7 sowie das Schleifleistenauflaufhorn 12 jeweils einen gegenüber der Horizontalen gemessenen Auflaufhornwinkel W1, W2 besitzen. Der Auflaufhornwinkel W1 des Bügelauflaufhorns 7 beträgt bei diesem Ausführungsbeispiel 40°, während der Auflaufhornwinkel W2 des Schleifleistenauflaufhorns 12 kleiner ist. Er beträgt bei diesem Ausführungsbeispiel 30°. Der gerade Abschnitt 16 des Bügelauflaufhorns 7 geht zu seinem freien Ende hin über einen Übergangsradius R1 zu einem vertikal nach unten abgewinkelten Ende 18 über. Der Übergangsradius R1 beträgt bei diesem Ausführungsbeispiel 58 mm.

Der gerade Abschnitt 17 des Schleifleistenauflaufhorns 12 geht ebenfalls in ein nach unten abgewinkeltes Ende 19 über, das parallel zu dem anderen Ende 18 des Bügelauflaufhorns 7 verläuft. Der Übergangsradius R2 im Übergang von dem geraden Abschnitt 17 zum Ende 19 ist jedoch größer als der Übergangsradius R1. Bei diesem Ausführungsbeispiel beträgt er 140 mm.

Zur Fahrzeugmitte hin sind die geraden Abschnitte 16, 17 ebenfalls über Radien an die weiteren Längenabschnitte des Bügels 5 bzw. der Schleifleiste 3 angeschlossen. Bei dem geraden Abschnitt 16 des Bügelauflaufhorns 7 beträgt der Übergangsradius R3 bei diesem Ausführungsbeispiel 260°. Der Übergangsradius R4 der Schleifleiste 3 des Hauptschleifstückes 3a ist kleiner. Er beträgt bei diesem Ausführungsbeispiel 240°.

Aus der Darstellung der Figur 7 ist ferner ein Übergangswinkel W3 zwischen den Ergänzungsschleifstücken 11 und dem sich daran anschließenden Bügelauflaufhorn 7 zu erkennen. Der Übergangswinkel W3 kann vorzugsweise ≤15°, insbesondere ≤10° sein. Der Übergangswinkel W3 beträgt bei diesem Ausführungsbeispiel 6°. Die Verlagerung der Bügel 4, 5 erfolgt in Horizontalrichtung, so dass das in der Bildebene der Figur 7 dargestellte Ergänzungsschleifstück 11 vollständig hinter dem Hauptschleifstück 3 zurücktritt. Dies gilt auch für das sich an das Ergänzungsschleifstück 11 anschließende leitende Teilstück, das sich über den Übergangsradius R3 in den geraden Abschnitt 16 erstreckt.

Wie anhand der Figur 7 zu erkennen ist, erstreckt sich das isolierte Teilstück 13 des Schleifleistenauflaufhornes 12 bis etwa mittig in den geraden Abschnitt 17 hinein.

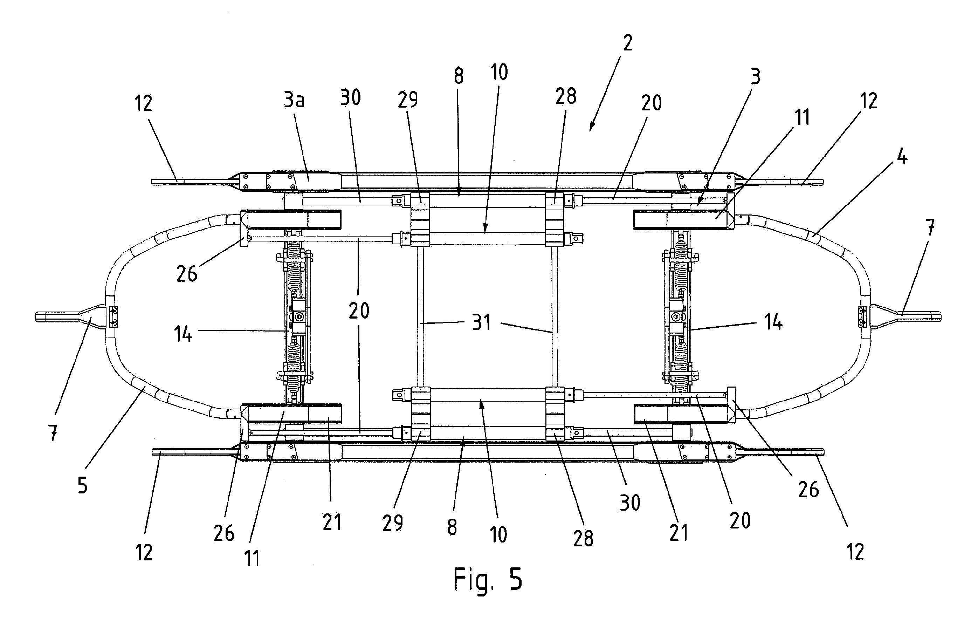

Nachfolgend werden die Stelleinrichtungen 8, 10 erläutert, mittels welcher die Bügel 4, 5 verschoben werden. Die Stelleinrichtungen 8, 10 sind identisch. Es handelt sich um Hubzylinder, mit einer ausfahrbaren Kolbenstange 20 (Figur 2). An der Kolbenstange 20 ist jeweils ein inneres Ende 21 des Bügels 4, 5 über ein Verbindungselement 26 befestigt (Figur 3). Das Verbindungselement 26 ist an einem äußeren Ende des Ergänzungsschleifstücks 11 angeordnet. Es steht quer zur Bewegungsrichtung des Bügels 4 in Horizontalrichtung, d.h. in Richtung der Schleifleisten 3, von dem jeweiligen Bügel 4, 5 ab. Daher befinden sich die Kolbenstangen 20 seitlich parallel zu den Bügeln 4, 5 (Figur 5).

Die Stelleinrichtungen 8, 10, die einem Paar von Enden 21 zweier in entgegengesetzte Richtung verlagerbaren Bügel 5, 4 zugeordnet sind, wirken in entgegengesetzte Richtungen und befinden sich auf unterschiedlichen Seiten der Enden 21. In der eingefahrenen Position (Figur 3) der Kolbenstangen, sind die sich unmittelbar gegenüberliegenden Enden 21 zwischen den Stelleinrichtungen 8, 10 angeordnet. In der ausgefahrenen Position (Figur 2) befinden sich die Enden 21 des Bügels 4, 5 außerhalb des von den Stelleinrichtungen 8, 10 begrenzten Raums.

Die Stelleinrichtungen 8, 10 besitzen ein lang gestrecktes Gehäuse 27 in Form eines Zylinders (Figur 2 und 3). Das Gehäuse 27 durchdringt zwei jeweils im Endbereich des Gehäuses 27 angeordnete Stelleinrichtungshalter 28, 29, die das Gehäuse 27 und damit die gesamte Stelleinrichtung 8, 10 ortsfest fixieren. Figur 5 zeigt, dass die Stelleinrichtungshalter 28, 29 nicht mit den Schleifleisten 3 verbunden sind, sondern über Längsstreben 30 mit jeweils einem Schleifleistenhalter 14 verbunden sind. Die Längsstreben 30 erstrecken sich parallel zu und unterhalb der Kolbenstangen 20. Jeweils ein Stelleinrichtungshalter 28, 29 ist mit einer Längsstrebe 30 verbunden. Zusätzlich zu den Längsstreben 30 ist jeder Stelleinrichtungshalter 28, 29 mit einem zweiten Stelleinrichtungshalter 28,29 verbunden, der sich in derselben Anordnung benachbart der zweiten Schleifleiste 3 befindet. Die Verbindung wird durch Querstreben 31 hergestellt, die sich in Fahrrichtung erstrecken.

Die Stelleinrichtungshalter 28, 29 sind U-förmig konfiguriert und nach oben offen. Sie besitzen zwei Schenkel, wobei in den oberen freien Enden jedes Schenkels die Stelleinrichtungen 8, 10 gelagert sind. Im unteren Bereich der Schenkel sind die Längsstreben 30 und Querstreben 31 befestigt.

Die Bügel 4, 5 werden ausschließlich von den Kolbenstangen 20 getragen. Sie kommen weder in der eingefahrenen noch in der ausgefahrenen Position mit weiteren, tragenden Bauteilen in Kontakt, so dass sie nicht festfrieren können.

Die Länge der Stelleinrichtungen 28, 29 steht im direkten Zusammenhang mit der Breite SB1 (B2-Profil EN 50367) und der Breite SB2 (B3-Profil EN 50367) der Stromabnehmerwippe 2. Figur 4 zeigt die möglichen Breiten SB1 und SB2.

Als vorteilhaft wird angesehen, dass die insgesamt vier Stelleinrichtungen 8, 10 unmittelbar an pneumatische oder hydraulische Leitungen angeschlossen sind. Die Ansteuerung der Stelleinrichtungen 8, 10, bzw. die Verlagerung zwischen den Positionen mit den Breiten SB1 und SB2, wird über eine Ventilplatte gesteuert, welche im Fahrzeug verbaut ist. Die Ventilplatte umfasst Ventilelemente für eine logische Und-Verknüpfung beider Stelleinrichtungen 8, 10 eines Bügelauflaufhornes 7. Wird z.B. einer der vier Stellzylinder nicht ausreichend mit Druckluft versorgt, gibt ein Druckwächter ein elektrisches Fehlersignal, so dass eine fehlerhafte Verstellung ausgeschlossen ist.

Die Verlagerung der Bügelauflaufhörner 7 erfolgt in der Senklage der Stromabnehmerwippe 2.

Die Position von jedem der beiden isolierten Teilstücke 15 der Bügelauflaufhörner 7 wird über einen Positionserfasser überwacht. Dies geschieht für die Wippenbreite SB1 durch die Positionserfasser 22, 23 und für die Wippenbreite SB2 durch die Positionserfasser 24, 25 (Fig. 1). Durch die Kombination einer Überwachung der Stellzylinder durch zwei Druckwächter je Bügelauflaufhorn 7 mit einer Einzelabfrage der Position jedes isolierten Teilstückes 15 der beiden Bügelauflaufhörner 7 ergibt sich die notwendige Betriebssicherheit. Wird eine Fehlermeldung der Druckwächter oder der Positionserfasser 22, 23, 24, 25 erkannt, wird das Anheben der Stromabnehmerwippe 2 nicht vollzogen.

Die Bügel 4, 5 sind in der gewählten Position pneumatisch oder hydraulisch verriegelbar und zwar durch die Stelleinrichtungen 21, d.h. bevorzugt durch Stellzylinder, selbst.

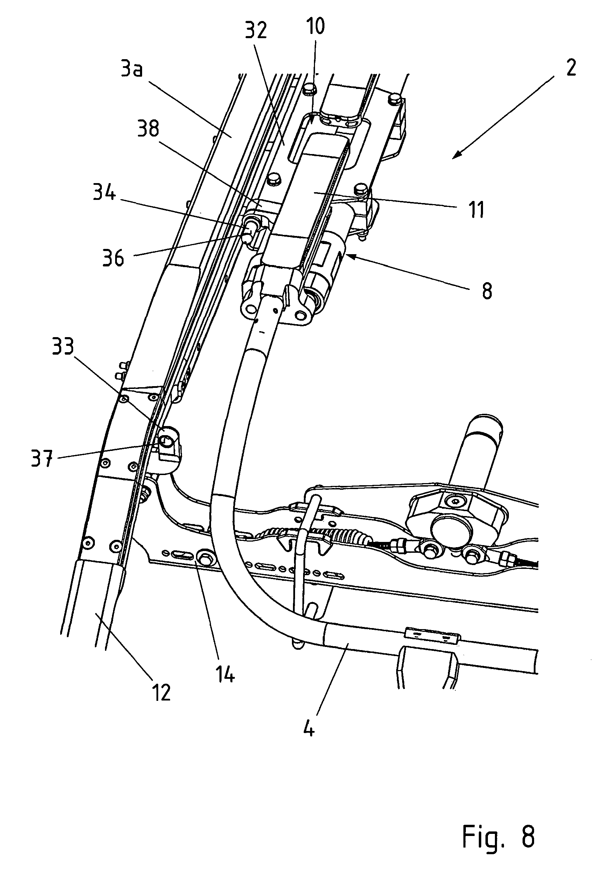

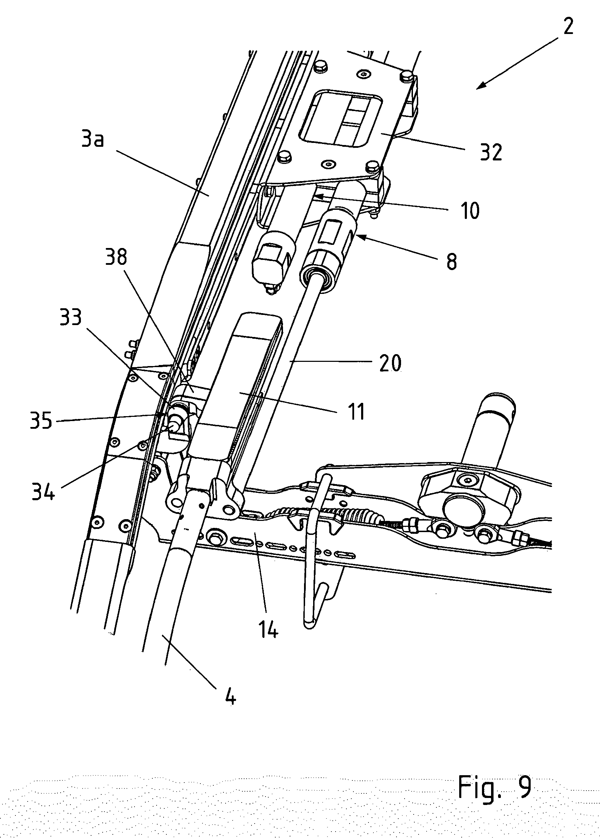

Die Figuren 8 und 9 zeigen in perspektivischer Darstellung einen Teil einer Stromabnehmerwippe 2 in eingefahrener (Figur 8) und ausgefahrener Position (Figur 9). Zur Unterstützung des Bügels 4 in der ausgefahrenen Position ist ein Stützlager 33 vorgesehen. Das Stützlager 33 befindet sich ortsfest an dem Schleifleistenhalter 14 nahe des Hauptschleifstücks 3a. Das Stützlager 33 ist als Bolzenaufnahme ausgebildet und dient zur Aufnahme eines Lagerbolzens 34. Der Lagerbolzen 34 ist am Bügel 4 befestigt und wird zusammen mit dem Bügel 4 von der Kolbenstange 20 der Stelleinrichtung 8 verlagert. In der eingefahrenen Position befindet sich der Lagerbolzen 34 benachbart einem Stelleinrichtungshalter 32. Der Stelleinrichtungshalter 32 ist aus einem U-förmig gebogenem Blech gebildet und nimmt zwei Stelleinrichtungen 8, 10 auf.

Der Lagerbolzen 34 bildet zusammen mit dem Stützlager 33 in der ausgefahrenen Stellung des Bügels 4 eine Lageranordnung 35. Der Lagerbolzen 34 durchsetzt dabei die Bolzenaufnahme vollständig und ragt teilweise aus der Bolzenaufnahme heraus.

Sowohl der Lagerbolzen 34 als auch das Stützlager 33 besitzen Kontaktflächen 36, 37, an denen sich die besagten Bauteile berühren. Die Kontaktflächen 36, 37 bestehen aus einem hydrophoben Werkstoff. Der Lagerbolzen 34 besteht aus PTFE. Das Stützlager 33 besteht aus einem Wasser abweisenden Kunststoff. Der Lagerbolzen 34 ist an einem Halter 38 befestigt, wobei er eine Bohrung in dem Halter 38 durchsetzt. Er ist auf seiner dem Stützlager 33 abgewandten Seite durch eine Mutter gesichert.

Zwischen den in den Figuren 8 und 9 dargestellten Endpositionen wird der Bügel 4 nicht von zusätzlichen Lagerungsmitteln geführt, sondern ist nur von der Kolbenstange 20 gehalten.

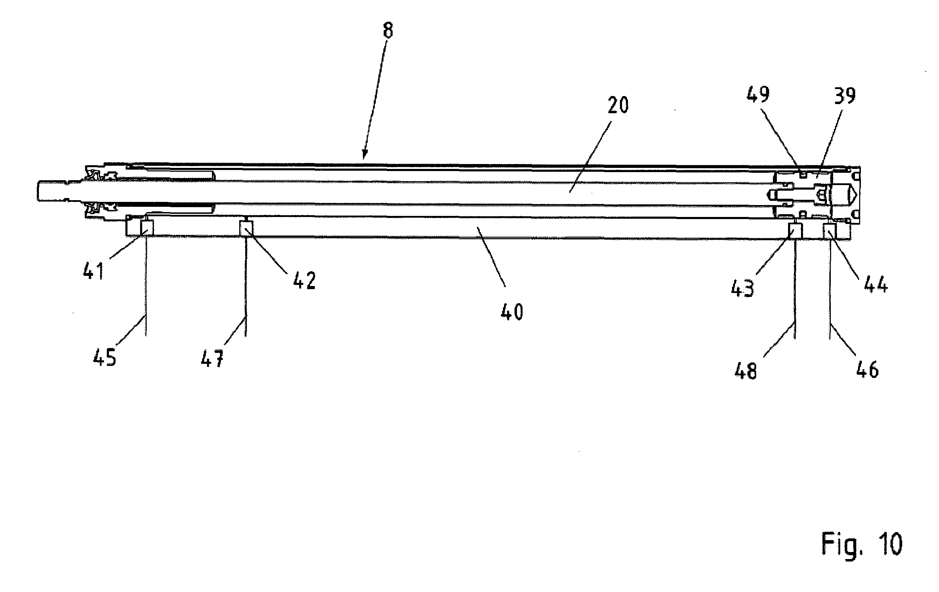

Figur 10 zeigt eine Stelleinrichtung 8 für eine Stromabnehmerwippe 2 im Längsschnitt, bei welcher die Endlagenabfrage in die Stelleinrichtung 8 integriert ist.

Die Stelleinrichtung 8 ist eine doppelt wirkende, pneumatische Kolben-Zylinder-Einheit mit einem Kolben 39, innerhalb eines Zylinders 40. Der Kolben 39 ist mit der Kolbenstange 20 verbunden. Der Zylinder 40 besitzt vier Anschlüsse 41-44. Die äußeren Anschlüsse 41, 44 dienen zur Versorgung mit Druckluft. Hier sind eine erste und eine zweite Versorgungsleitung 45, 46 angeschlossen. Die beiden mittleren Anschlüsse 42, 43 sind Steueranschlüsse für eine erste und eine zweite Steuerleitung 47, 48. Eine Dichtung 49 am Kolben 39 trennt in den Endlagen des Kolbens 39 die benachbarten ersten und zweiten Anschlüsse 41-44 voneinander. Die Anschlüsse 42, 43 für die Steuerleitungen 47, 48 sind in der eingefahrenen bzw. ausgefahrenen Stellung nahe der Dichtung 49 angeordnet.

Die Steuerleitungen 47, 48 sind in nicht näher dargestellter Weise mit Druckschaltern verbunden, welche elektrische Signale an eine ebenfalls nicht näher dargestellte elektrische Fahrzeugsteuerung leiten, welche die Signale logisch verknüpft.

In der dargestellten eingefahrenen Endlage sind beide Steuerleitungen 47, 48 mit Druck beaufschlagt. Wenn die Kolbenstange 20 ausgefahren werden soll, wird die zweite Versorgungsleitung 46 mit Druck beaufschlagt. Damit sich der Kolben 39 bewegt, wird gleichzeitig der Druck in der ersten Versorgungsleitung 45 gesenkt. Er fällt dann auch zunächst in den beiden Steuerleitungen 47, 48 ab. Wenn der Kolben 39 mit seiner Dichtung 49 den Anschluss 43 der zweiten Steuerleitung 48 passiert hat, steigt der Druck in der zweiten Steuerleitung 48 wieder an. Wenn der Kolben 39 seine andere Endstellung erreicht, steigt auch der Druck in der ersten Steuerleitung 47 an. So ergeben sich unter Berücksichtigung des Druckes in den Versorgungsleitungen 45, 46 insgesamt vier Messwerte, anhand derer die Endlagen des Kolbens 39 durch logische Verknüpfung der Messwerte sicher bestimmbar sind. Wenn an den Anschlüssen 41 bis 43 Druck anliegt ist der Kolben 39 eingefahren. Wenn an den Anschlüssen 42 bis 44 Druck anliegt ist der Kolben 39 ausgefahren. Liegt nur an einer der Steuerleitungen 47, 48 Druck an, befindet sich der Kolben 39 in einer Zwischenstellung.

In nicht näher dargestellter Weise kann die zweite Versorgungsleitung 46 mit einem Kanal eines Ergänzungsschleifstückes 11 zur Überwachung des Ergänzungsschleifstückes 11 verbunden sein (ADD-Abfrage).

### Bezugszeichen:

- 1: Stromabnehmer
- 2: Stromabnehmerwippe
- 3: Schleifleiste
- 3a: Hauptschleifstück
- 4: Bügel
- 5: Bügel
- 6: Bügelanordnung
- 7: Bügelauflaufhorn
- 8: Stelleinrichtung
- 9: Grundrahmen
- 10: Stelleinrichtung
- 11: Ergänzungsschleifstück
- 12: Schleifleistenauflaufhorn
- 13: isoliertes Teilstück von 12
- 14: Schleifleistenhalter
- 15: isoliertes Teilstück von 7
- 16: gerader Abschnitt von 7
- 17: gerader Abschnitt von 12
- 18: Ende von 7
- 19: Ende von 12
- 20: Kolbenstange
- 21: Ende
- 22: Positionserfasser
- 23: Positionserfasser
- 24: Positionserfasser
- 25: Positionserfasser
- 26: Verbindungselement
- 27: Gehäuse
- 28: Stelleinrichtungshalter
- 29: Stelleinrichtungshalter
- 30: Längsstrebe
- 31: Querstrebe
- 32: Stelleinrichtungshalter
- 33: Stützlager
- 34: Lagerbolzen
- 35: Lageranordnung
- 36: Kontaktfläche
- 37: Kontaktfläche
- 38: Halter
- 39: Kolben
- 40: Zylinder
- 41: Anschluss
- 42: Anschluss
- 43: Anschluss
- 44: Anschluss
- 45: erste Versorgungsleitung
- 46: zweite Versorgungsleitung
- 47: erste Steuerleitung
- 48: zweite Steuerleitung
- 49: Dichtung

- SB1: Breite1
- SB2: Breite 2
- R1: Übergangsradius 1
- R2: Übergangsradius 2
- R3: Übergangsradius 3
- R4: Übergangsradius 4
- W1: Auflaufhornwinkel von 7
- W2: Auflaufhornwinkel von 12
- W3: Auflaufhornwinkel von 11

## Patentansprüche

1. Stromabnehmer für elektrisch angetriebene Fahrzeuge mit einer Stromabnehmerwippe (2) mit folgenden Merkmalen:
a) die Stromabnehmerwippe (2) weist wenigstens eine quer zur Fahrtrichtung angeordnete Schleifleiste (3) auf;
b) die Stromabnehmerwippe (2) ist mit quer zur Fahrtrichtung angeordneten Bügeln (4, 5) versehen, die an ihren Enden Bügelauflaufhörner (7) besitzen;
c) die Stromabnehmerwippe (2) ist durch Verlagerung der Bügel (4, 5) mittels wenigstens einer Stelleinrichtung (8, 10) in der Breite (SB1, SB2) verstellbar;
**gekennzeichnet durch** folgende Merkmale:
d) die Schleifleiste (3) besitzt an ihren Enden Schleifleistenauflaufhörner (12);
e) die beiden Bügel (4, 5) mit den Bügelauflaufhörnern (7) stehen in der eingefahrenen Position seitlich nicht über das von der Schleifleiste (3) und den Schleifleistenauflaufhörnern (12) begrenzte Profil vor;
f) die Bügel (4, 5) sind zumindest in der eingefahrenen Position nur von der wenigstens einen Stelleinrichtung (8, 10) geführt und getragen.

2. Stromabnehmer nach Anspruch 1, **dadurch gekennzeichnet, dass** die Bügel (4, 5) in der ausgefahrenen Position von der wenigstens einen Stelleinrichtung (8, 10) geführt und getragen sind und in der ausgefahrenen Position zusätzlich mit einem Stützlager (33) in Kontakt bringbar sind.

3. Stromabnehmer nach Anspruch 2, **dadurch gekennzeichnet, dass** das Stützlager (33) als Bestandteil einer Lageranordnung (35) entweder als Bolzenaufnahme oder als Lagerbolzen (34) für den gegenseitigen Wirkeingriff ausgebildet ist.

4. Stromabnehmer nach Anspruch 3, **dadurch gekennzeichnet, dass** der Lagerbolzen (34) und/oder das Stützlager (33) zumindest im Bereich ihrer gegenseitigen Kontaktflächen (36, 37) einen Werkstoff mit hydrophoben Eigenschaften mit einem Kontaktwinkel größer 90° und/oder einen Werkstoff mit einem Wärmeleitwert kleiner 2 W/mK aufweisen

5. Stromabnehmern nach einem der Ansprüche 1 bis 4, **dadurch gekennzeichnet, dass** sich innere Enden (21) der Bügel (4, 5) quer zur Fahrtrichtung unmittelbar gegenüber liegen und sich in der eingefahrenen Position der Bügel (4, 5) zwischen beiderseits der Enden (21) angeordneten Stelleinrichtungen (8, 10) befinden, die jeweils mit einem der Bügel (4, 5) verbunden sind.

6. Stromabnehmer nach Anspruch 5, **dadurch gekennzeichnet, dass** die Stelleinrichtungen (8, 10) von sich gegenüberliegenden Enden (21) der Bügel (4, 5) über wenigstens einen Stelleinrichtungshalter (28, 29) verbunden sind, welcher eine Aufnahme für die Enden (21) besitzt.

7. Stromabnehmer nach Anspruch 6, **dadurch gekennzeichnet, dass** die Stelleinrichtungen (8, 10) linear wirken und ein lang gestrecktes Gehäuse (27) besitzen, wobei jeweils ein Stelleinrichtungshalter (28, 29) im Bereich eines Endes des Gehäuses (27) angeordnet ist.

8. Stromabnehmer nach Anspruch 6 oder 7, **dadurch gekennzeichnet, dass** die Stelleinrichtungshalter (28, 29) mit Schleifleistenhaltern (14) verbunden sind.

9. Stromabnehmer nach einem der Ansprüche 1 bis 8, **dadurch gekennzeichnet, dass** die Schleifleiste (3) ein Hauptschleifstück (3a) und zwei gegenüber dem Hauptschleifstück (3a) in entgegengesetzte Richtungen verlagerbare Ergänzungsschleifstücke (11) aufweist, die an quer zur Fahrtrichtung angeordneten Bügeln (4, 5) angeordnet sind.

10. Stromabnehmer nach einem der Ansprüche 1 bis 9, **dadurch gekennzeichnet, dass** die Bügelauflaufhörner (7) in der eingefahrenen Position teilweise hinter das von der Schleifleiste (3) zusammen mit den Schleifleistenauflaufhörnern (12) begrenzte Profil zurücktreten.

11. Stromabnehmer nach einem der Ansprüche 1 bis 10, **dadurch gekennzeichnet, dass** die Bügelauflaufhörner (7) und die Schleifleistenauflaufhörner (12) jeweils gerade Abschnitte (16, 17) aufweisen, die jeweils einen gegenüber der Horizontalen gemessenen Auflaufhornwinkel (W1, W2) besitzen, wobei der Auflaufhornwinkel (W1) der Bügelauflaufhörner (7) größer ist als der Auflaufhornwinkel (W2) der Schleifleistenauflaufhörner (12).

12. Stromabnehmer nach einem der Ansprüche 1 bis 11, **dadurch gekennzeichnet, dass** Positionserfasser (22, 23, 24, 25) zur Bestimmung der Position der Bügel (4, 5) in abgesenkter und gehobener Stellung des Stromabnehmers (1) vorgesehen sind.

13. Stromabnehmer nach einem der Ansprüche 1 bis 12, **dadurch gekennzeichnet, dass** das wenigstens eine Hauptschleifstück (3a) und/oder die Ergänzungsschleifstücke (11) mit Kanälen für den Anschluss an eine automatische Senkeinrichtung versehen sind.

14. Stromabnehmer nach einem der Ansprüche 1 bis 13, **dadurch gekennzeichnet, dass** die Stelleinrichtung (8, 10) als Kolben-Zylinder-Einheit ausgeführt ist, wobei benachbart den Endstellungen des Kolbens (39) der Kolben-Zylinder-Einheit Steuerleitungen (47, 48) an den Zylinder (40) der Kolben-Zylinder-Einheit angeschlossen sind, welche mit Drucksensoren zum Erfassen einer Druckänderung verbunden sind, wobei der Druck in den beiden Steuerleitungen (47, 48) nacheinander ansteigt, wenn der Kolben (39) von der eingefahrenen Endstellung in die ausgefahrene Endstellung verlagert wird, wobei eine logische Verknüpfung der Drucksignale vorgesehen ist.

## Claims

1. Pantograph for electrically powered vehicles with a pantograph rocker (2) having the following features:
a) the pantograph rocker (2) has at least one abrasive strip (3) arranged transverse to the direction of travel;
b) the pantograph rocker (2) is provided with brackets (4, 5) arranged transverse to the direction of travel, which have bracket ramp horns (7) at their ends;
c) the width (SB1, SB2) of the pantograph rocker (2) is adjustable by shifting the bracket (4, 5) with the help of at least one adjusting unit (8, 10);
**characterised by** the following features:
d) the abrasive strip (3) has abrasive strip ramp horns (12) at its ends;
e) both the brackets (4, 5) with the bracket ramp horns (7) do not laterally protrude over the profile limited by the abrasive strip (3) and the abrasive strip ramp horns (12) in the retracted position.
f) the brackets (4, 5) are guided and supported by at least one adjusting unit (8, 10) at least in the retracted position.

2. Pantograph according to claim 1, **characterised in that** the brackets (4, 5) in the extended position are guided and supported by the at least one adjusting unit (8, 10) and can also be brought into contact with a supporting bearing (33) in the extended position.

3. Pantograph according to claim 2, **characterised in that** the supporting bearing (33), as an integral part of a bearing arrangement (35), is either designed as a pin support or as a bearing pin (34) for the two-way active intervention.

4. Pantograph according to claim 3, **characterised in that** the bearing pin (34) and/or the supporting bearing (33) have a substance with hydrophobic properties with a contact angle greater than 90° and/or a substance with a thermal conductibility less than 2 W/mK at least in the area of their mutual contact surfaces (36, 37).

5. Pantographs according to one of the claims 1 to 4, **characterised in that** inner ends (21) of the brackets (4, 5) lie directly opposite, transverse to the direction of travel and are arranged in the retracted position of the brackets (4, 5) between adjusting units (8, 10) on both sides of the ends (21), which are linked to one of the brackets (4, 5) in each case.

6. Pantograph according to claim 5, **characterised in that** the adjusting units (8, 10) are connected via at least one adjusting unit holder (28, 29) from the opposite ends (21) of the brackets (4, 5), which has a support for the ends (21).

7. Pantograph according to claim 6, **characterised in that** the adjusting units (8, 10) work linear and have an elongated housing (27), whereby an adjusting unit holder (28, 29) is arranged in the area of one end of the housing (27) in each case.

8. Pantograph according to claim 6 or 7, **characterised in that** the adjusting unit holders (28, 29) are connected to control strip holders (14).

9. Pantograph according to one of the claims 1 to 8, **characterised in that** the abrasive strip (3) has one main friction piece (3a) and two additional friction pieces (11) movable in opposite directions compared to the main friction piece (3a), which are arranged at the brackets (4, 5) arranged transverse to the direction of travel.

10. Pantograph according to one of the claims 1 to 9, **characterised in that** the bracket ramp horns (7) in the retracted position partially recede behind the profile limited by the abrasive strip (3) together with the abrasive strip ramp horns (12).

11. Pantograph according to one of the claims 1 to 10, **characterised in that** the bracket ramp horns (7) and the abrasive strip ramp horns (12) both have straight sections (16, 17), which have a ramp horn angle (W1, W2) measured as against the horizontals in each case, whereby the ramp horn angle (W1) of the bracket ramp horn (7) is bigger than the ramp horn angle (W2) of the abrasive strip ramp horn (12).

12. Pantograph according to one of the claims 1 to 11, **characterised in that** the position recorders (22, 23, 24, 25) are designed for determining the position of the brackets (4, 5) in a lowered and raised position of the Pantograph (1).

13. Pantograph according to one of the claims 1 to 12, **characterised in that** the at least one main friction piece (3a) and/or the additional friction piece (11) are designed with channels for connecting to automatic lowering units.

14. Pantograph according to one of the claims 1 to 13, **characterised in that** the adjusting unit (8, 10) is designed as a piston-cylinder unit, whereby control lines (47, 48) are connected to the cylinder (40) of the piston-cylinder unit adjacent to the end positions of the piston (39) of the piston-cylinder unit, which are connected to the pressure sensors for recording a pressure change, whereby the pressure in both the control lines (47, 48) increases in succession if the piston (39) is moved from the retracted end position to the extended end position, whereby a logical linking of the pressure signals is designed.

## Revendications

1. Pantographe destiné à des véhicules à moteur électrique, comportant un archet de pantographe (2), avec les caractéristiques suivantes :
a) l'archet de pantographe (2) comporte au moins un frotteur (3) agencé transversalement au sens de la marche ;
b) l'archet de pantographe (2) est muni d'étriers (4, 5) qui sont agencés transversalement au sens de la marche et qui ont à leurs extrémités des cornes de passage d'étrier (7) ;
c) l'archet de pantographe (2) est réglable en largeur (SB1, SB2) par déplacement des étriers (4, 5) au moyen d'au moins un dispositif de réglage (8, 10) ;
**caractérisé par** les caractéristiques suivantes :
d) le frotteur (3) comporte à ses extrémités des cornes de passage de frotteur (12) ;
e) en position rentrée, les deux étriers (4, 5) avec les cornes de passage d'étrier (7) ne dépassent pas latéralement du profil délimité par le frotteur (3) et par les cornes de passage de frotteur (12) ;
f) au moins en position rentrée, les étriers (4, 5) sont guidés et portés seulement par l'au moins un dispositif de réglage (8, 10).

2. Pantographe selon la revendication 1, **caractérisé en ce que** les étriers (4, 5) sont, en position sortie, guidés et portés par l'au moins un dispositif de réglage (8, 10) et peuvent être en plus, en position sortie, amenés en contact avec une butée (33).

3. Pantographe selon la revendication 2, **caractérisé en ce que** la butée (33) est conçue comme faisant partie d'un agencement de palier (35) soit comme logement d'axe soit comme axe de palier (34) pour l'interaction mutuelle.

4. Pantographe selon la revendication 3, **caractérisé en ce que** l'axe de palier (34) et/ou la butée (33) comportent au moins dans la zone de leurs surfaces de contact mutuelles (36, 37) un matériau ayant des propriétés hydrophobes avec un angle de contact supérieur à 90° et/ou un matériau avec un coefficient de conductivité thermique inférieur à 2 W/mK.

5. Pantographe selon l'une des revendications 1 à 4, **caractérisé en ce que** des extrémités intérieures (21) des étriers (4, 5) se font directement face transversalement par rapport au sens de la marche et se trouvent, lorsque les étriers (4, 5) sont en position rentrée, entre des dispositifs de réglage (8, 10) qui sont agencés des deux côtés des extrémités (21) et qui sont reliés chacun à l'un des étriers (4, 5).

6. Pantographe selon la revendication 5, **caractérisé en ce que** les dispositifs de réglage (8, 10) sont reliés par des extrémités se faisant face (21) des étriers (4, 5) par l'intermédiaire d'au moins une fixation de dispositif de réglage (28, 29) qui comporte un logement pour les extrémités (21).

7. Pantographe selon la revendication 6, **caractérisé en ce que** les dispositifs de réglage (8, 10) agissent de façon linéaire et comportent un carter (27) s'étendant dans le sens de la longueur, chaque fixation de dispositif de réglage (28, 29) étant agencée dans la zone d'une extrémité du carter (27).

8. Pantographe selon la revendication 6 ou 7, **caractérisé en ce que** les fixations de dispositif de réglage (28, 29) sont reliées à des fixations de frotteur (14).

9. Pantographe selon l'une des revendications 1 à 8, **caractérisé en ce que** le frotteur (3) comporte une pièce de frottement principale (3a) et deux pièces de frottement complémentaires (11) qui peuvent être déplacées dans des directions opposées par rapport à la pièce de frottement principale (3a) et qui sont agencées sur des étriers (4, 5) agencés transversalement par rapport au sens de la marche.

10. Pantographe selon l'une des revendications 1 à 9, **caractérisé en ce que**, en position rentrée, les cornes de passage d'étrier (7) rentrent en partie derrière le profil délimité par le frotteur (3) conjointement aux cornes de passage de frotteur (12).

11. Pantographe selon l'une des revendications 1 à 10, **caractérisé en ce que** les cornes de passage d'étrier (7) et les cornes de passage de frotteur (12) comportent à chaque fois des tronçons droits (16, 17) qui présentent à chaque fois un angle de corne de passage (W1, W2) mesuré par rapport à l'horizontale, l'angle de corne de passage (W1) des cornes de passage d'étrier (7) étant supérieur à l'angle de corne de passage (W2) des cornes de passage de frotteur (12).

12. Pantographe selon l'une des revendications 1 à 11, **caractérisé en ce que** des capteurs de position (22, 23, 24, 25) sont prévus pour déterminer la position des étriers (4, 5) dans les positions abaissée et levée du pantographe (1).

13. Pantographe selon l'une des revendications 1 à 12, **caractérisé en ce qu'**au moins une pièce de frottement principale (3a) et/ou les pièces de frottement complémentaires (11) sont munies de canaux pour le raccordement à un dispositif d'abaissement automatique.

14. Pantographe selon l'une des revendications 1 à 13, **caractérisé en ce que** le dispositif de réglage (8, 10) est réalisé sous la forme d'une unité piston-cylindre, des conduites de commande (47, 48) étant raccordées au cylindre (40) de l'unité piston-cylindre au voisinage des positions terminales du piston (39), lesquelles conduites de commande sont reliées à des capteurs de pression destinés à détecter une variation de pression, la pression dans les deux conduites de commande (47, 48) augmentant l'une après l'autre lorsque le piston (39) est déplacé de la position terminale rentrée à la position terminale sortie, une combinaison logique des signaux de pression étant prévue.
